(19) Europäisches Patentamt
European Patent Office
Office européen des brevets

(11) EP 4 293 058 A1

(12) **EUROPEAN PATENT APPLICATION**
published in accordance with Art. 153(4) EPC

(43) Date of publication:
**20.12.2023 Bulletin 2023/51**

(21) Application number: **22752825.4**

(22) Date of filing: **10.02.2022**

(51) International Patent Classification (IPC):
***C08F 220/56*** *(2006.01)* ***C04B 24/24*** *(2006.01)*
***C04B 24/26*** *(2006.01)* ***C04B 28/02*** *(2006.01)*

(52) Cooperative Patent Classification (CPC):
**C04B 24/24; C04B 24/26; C04B 28/02; C08F 220/56**

(86) International application number:
**PCT/JP2022/005398**

(87) International publication number:
**WO 2022/173003 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.02.2021 JP 2021021447**

(71) Applicant: **Nippon Shokubai Co., Ltd.**
**Osaka-shi, Osaka 541-0043 (JP)**

(72) Inventor: **AKAO, Yuya**
**Suita-shi, Osaka 564-0034 (JP)**

(74) Representative: **Winter, Brandl - Partnerschaft mbB**
**Alois-Steinecker-Straße 22**
**85354 Freising (DE)**

(54) **SHRINKAGE REDUCING AGENT AND CEMENT COMPOSITION**

(57) In order to provide a shrinkage reducing agent that enables exertion of an effect of causing uniform shrinkage and a cement composition that contains this shrinkage reducing agent, the present invention uses a shrinkage reducing agent which is characterized by containing a crosslinked polymer that is formed by polymerizing a monomer mixture containing 40% by mole or more of a nonionic non-crosslinkable monomer and 0.05% by mole or more of a nonionic crosslinkable monomer, with the content of an anionic monomer in the monomer mixture being 59.95% by mole or less, and which is also characterized in that a water absorption rate of the crosslinked polymer is less than 25 g/g in cases where the crosslinked polymer is immersed in an aqueous solution having a pH of 12.9 at 25°C for 2 hours (meanwhile, the aqueous solution having a pH of 12.9 is obtained by mixing 1.72 g of $CaSO_4 \cdot 2H_2O$, 6.96 g of $Na_2SO_4$, 4.76 g of $K_2SO_4$, 7.12 g of KOH and 979.4 g of deionized water).

EP 4 293 058 A1

## Description

### TECHNICAL FIELD

The present invention relates to a shrinkage reducing agent and a method for reducing shrinkage of cement. More specifically, the present invention relates to a shrinkage reducing agent containing a nonionic crosslinked polymer, a method for reducing shrinkage of cement using a nonionic crosslinked polymer, and a cement composition containing a shrinkage reducing agent.

### BACKGROUND ART

In cement compositions such as cement paste, mortar, concrete, and the like used for constructing civil engineering structures and building structures, a cement dispersant is added in addition to cement, to enhance fluidity of the cement composition, and water is further added.

As a cement dispersant, a cement dispersant essentially containing a copolymer containing a constitutional unit derived from an unsaturated (poly)alkylene glycol ether-based monomer having an alkenyl group having 4 carbon atoms and a constitutional unit derived from an unsaturated monocarboxylic acid-based monomer (see Patent Literature 1) and the like have been developed, and improvement of curing delay of a cement composition and exhibition of early strength are realized in addition to exhibition of dispersibility.

In addition, blending a liquid absorbent into cement has been studied heretofore, and it is known that the liquid absorbent is effective in suppressing the occurrence of cracks in a cement cured product (see Patent Literature 2).

On the other hand, Non-Patent Literature 1, Non-Patent Literature 2, Non-Patent Literature 3, and Non-Patent Literature 4 introduce the results of evaluating the autogenous shrinkage properties of a cement blend obtained by adding a water-absorbent resin product to a cement product.

Further, Patent Literature 3 is taken as a related literature.

Citation List

Patent Literatures

Patent Literature 1: JP 2002-121055 A
Patent Literature 2: JP H04-346833 A
Patent Literature 3: WO 2020/209057 A

Non-Patent Literatures

Non-Patent Literature 1: "Effect of internal curing by using superabsorbent polymer (SAP) on autogenous shrinkage and other properties of a high-performance fine-grained concrete: result of a RILEM round-robin test", Materials and Structures (2014) 47:541-562
Non-Patent Literature 2: "Mitigating autogenous shrinkage in HPC by internal curing using superabsorbent polymers", International RILEM Conference on Volume Changes of Hardening Concrete: Testing and Mitigation 20-23 August 2006
Non-Patent Literature 3: "The influence of superabsorbent polymers on the autogenous shrinkage properties of cement pastes with supplementary cementitious materials", Cement and Concrete Research 74(2015) 59-67
Non-Patent Literature 4: "The use of superabsorbent polymers in high performance concrete to mitigate autogenous shrinkage in a large-scale demonstrator", Sustainability 2020,12(11),4741

### SUMMARY OF INVENTION

In a cement composition, there is a phenomenon called autogenous shrinkage in which the inside is dried by hydration of cement itself. When the distribution of water is uneven in the cement composition, a portion where water is unevenly distributed undergoes autogenous shrinkage to a large extent, and a portion where water is not unevenly distributed does not undergo autogenous shrinkage (or the amount of shrinkage is small), and thus, cracking of concrete may occur or the strength of concrete may decrease. The copolymer for a cement dispersant described in Patent

Literature 1 is used for dispersing cement in water, and it does not have an action of uniformly dispersing water in a cement composition. In addition, the problem of uneven autogenous shrinkage due to uneven distribution of water described above is also a problem that occurs when a cement dispersant as described in Patent Literature 1 is used.

Autogenous shrinkage is defined as "volume reduction caused macroscopically after the beginning of setting by hydration of cement in cementitious material" by the Japan Concrete Institute, Research Committee on Autogenous Shrinkage. In the definition, it is said "volume change due to intrusion or dissipation of substances, temperature change, external force, or external restraint is not included". That is, autogenous shrinkage refers to a phenomenon of a cured material after the start of setting in which stress can be transmitted, macroscopic volume reduction including voids and the like, and shrinkage excluding raw dry shrinkage caused by moisture evaporation and temperature shrinkage caused when the temperature drops, and the like.

Patent Literature 2 reports suppression of bleeding of a cement composition and a mortar composition with an N-vinylacetamide crosslinked product, prevention of crack generation of a cured material due to a wet curing effect, increase in strength, and improvement in a dimensional change rate, but does not study an effect of reducing autogenous shrinkage of a cement composition.

Non-Patent Literature 1, Non-Patent Literature 2, Non-Patent Literature 3, and Non-Patent Literature 4 introduce the results of evaluating the autogenous shrinkage properties of a cement blend obtained by adding a water-absorbent resin product to a cement product. However, when these water-absorbent resins are added for the purpose of reducing drying shrinkage and autogenous shrinkage of cement, there is a problem that sufficient performance cannot be exhibited in practical use.

The present invention has been made in view of the above circumstances, and an object of the present invention is to provide a shrinkage reducing agent capable of exhibiting shrinkage reducing performance, and a cement composition containing such a shrinkage reducing agent.

The inventors of the present invention have conducted intensive studies in order to solve the above problems. As a result, the inventors have found that a crosslinked polymer containing a specific nonionic monomer has shrinkage reduction performance, and have conceived the present invention.

## BRIEF DESCRIPTION OF DRAWINGS

Fig. 1 is a schematic diagram illustrating a method for measuring autogenous shrinkage strain.

## DESCRIPTION OF EMBODIMENTS

The present invention is a shrinkage reducing agent containing a specific crosslinked polymer. The present invention is a method for reducing shrinkage of a cement composition containing cement and water by using the shrinkage reducing agent, and is also a cement composition containing the shrinkage reducing agent, cement, and water.

The nonionic crosslinked polymer of the present invention has performance of reducing shrinkage such as drying shrinkage reduction and autogenous shrinkage reduction.

Hereinafter, the present invention will be described in detail. Note that a combination of two or more of the preferred embodiments of the present invention described below in separated paragraphs is also a preferred embodiment of the present invention and is considered to be disclosed in the present specification (that is, it is a legitimate basis of amendments).

Hereinafter, the shrinkage reducing agent, the crosslinked polymer, and the cement composition will be described in detail. In the present specification, "X to Y" indicating a range means "no less than X and no more than Y". In the present specification, "an acid (salt)" means "an acid and/or a salt thereof". " (Meth)acrylic" means "acrylic and/or methacrylic". Further, "weight" and "mass", "parts by weight" and "parts by mass", and "weight%" and "mass%" are treated as synonyms, respectively.

[Shrinkage reducing agent]

A shrinkage reducing agent of the present invention contains a crosslinked polymer, wherein the crosslinked polymer is formed by polymerizing a monomer mixture containing no less than 40 mol% of a nonionic non-crosslinkable monomer and no less than 0.05 mol% of a nonionic crosslinkable monomer, a content of an anionic monomer in the monomer mixture is no more than 59.95 mol%. In addition, a water absorption ratio when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 25 g/g. The crosslinked polymer is also referred to as "crosslinked polymer of the present invention".

By using the shrinkage reducing agent of the present invention, shrinkage, particularly the autogenous shrinkage

of the molded body is remarkably reduced. The shrinkage reduction is for autogenous shrinkage and drying shrinkage. Here, autogenous shrinkage refers to a phenomenon in which a structure actively shrinks because of a hydration reaction in an environment where a water cement ratio is low or water loss is small at a very early material age. Since the phenomenon of autogenous shrinkage converges after about 7 days at the latest, it can be said that autogenous shrinkage is shrinkage observed at a very early stage. Regarding the effect of reducing shrinkage, particularly the effect of reducing autogenous shrinkage, it is considered that since the crosslinked polymer of the present invention does not exhibit high water absorption performance immediately after addition of water (up to about 2 hours) because of the crosslinked structure, the water-cement ratio immediately after addition of water is maintained high, and thus, autogenous shrinkage, which is initial shrinkage, is suppressed. Therefore, a preferred aspect of the present invention is an autogenous shrinkage reducing agent. Further, for example, after a lapse of 7 days, which is the convergence point of autogenous shrinkage, the water absorption performance of the crosslinked polymer is higher than the initial water absorption performance (about 2 hours) because of the decomposition of the crosslinked structure in the presence of alkali (see Examples described later). This means that the crosslinked assembly slowly retains water, and it is possible to suppress shrinkage by slowly advancing the hydration reaction of the cement, by gradually absorbing water and then slowly releasing water. The characteristics of shrinkage reduction, particularly autogenous shrinkage reduction achieved by adopting this configuration are not described in any of the above documents, that is, the use as a shrinkage reducing agent is not known.

The water absorption ratio of the crosslinked polymer when the crosslinked polymer is immersed in an aqueous solution having a pH of 12.9 at 25°C for 2 hours is less than 25 g/g. By the crosslinked polymer having such a property, a shrinkage reduction effect is exhibited. The water absorption ratio of the crosslinked polymer when the crosslinked polymer is immersed in an aqueous solution having a pH of 12.9 at 25°C for 2 hours is preferably no less than 5 g/g, more preferably no less than 10 g/g, and still more preferably no less than 12 g/g, since the relative humidity in the concrete can be maintained and the hydration reaction of the cement can be made to proceed slowly as the amount of water to be gradually released over a long period of time increases. The above-described 25°C means that the room temperature is 25°C.

In the present specification, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water. The aqueous solution having a pH of 12.9 is a cement simulated liquid that simulates strong alkali when containing cement. Thus, by the aqueous solution, the behavior of the crosslinked polymer when water is added to the cement composition can be mimicked.

The water absorption ratio of the crosslinked polymer in the case of immersion in an aqueous solution having a pH of 12.9 at 25°C for 7 days is, for example, preferably no less than 10 g/g, no less than 16 g/g, or no less than 20 g/g, more preferably no less than 30 g/g or more, and particularly preferably no less than 35 g/g. The water absorption ratio at the initial stage (2 hours) is low, but it is considered that having a certain level of water absorption performance after a long period of time is effective in reducing shrinkage. The water absorption ratio in the case of immersion in an aqueous solution having a pH of 12.9 at 25°C for 7 days is preferably as high as possible. The upper limit thereof is not particularly limited, and is usually no more than 50 g/g, and preferably no more than 45 g/g.

The crosslinked polymer is preferably a powder, and the shape of the powder may be a spherical shape, an aggregate thereof, or an irregular shape (crushed shape) obtained by subjecting a hydrogel or a dry polymer to a pulverization step but is preferably an irregular shape (crushed shape).

The average particle size (D50) of the crosslinked polymer (powder) is preferably in the range of 10 to 1000 μm, more preferably in the range of 100 to 850 um, still more preferably in the range of 250 to 850 um, further still more preferably in the range of 250 to 700 μm, and further still more preferably in the range of 250 to 600 μm. It is considered that as the average particle size of the crosslinked polymer (powder) increases, the property of gradually releasing water is enhanced, and the long-term strength further improves. Having the average particle size of the crosslinked polymer (powder) of no more than the above-described upper limit is preferable from the viewpoint of freeze-thaw resistance.

The shrinkage reducing agent contains a crosslinked polymer as a main component. Here, the main component means that the crosslinked polymer takes up no less than 80 mass%, preferably no less than 90 mass%, more preferably no less than 95 mass%, and most preferably no less than 98 mass%, and particularly preferably 100 mass% of the shrinkage reducing agent (the upper limit is 100 mass%, that is, a shrinkage reducing agent consisting of a crosslinked polymer).

The shrinkage reducing agent may contain, in addition to the crosslinked polymer, a surfactant, a coloring inhibitor, a reducing agent, and the like in an amount of 0 to 10 mass% and preferably 0.1 to 1 mass%, respectively, for the purpose of stabilizing the crosslinked polymer and the like.

[Crosslinked polymer]

The crosslinked polymer of the present invention is formed by polymerizing a monomer mixture containing no less than 40 mol% of a nonionic non-crosslinkable monomer and no less than 0.05 mol% of a nonionic crosslinkable

monomer. In other words, the crosslinked polymer includes no less than 40 mol% of a constitutional unit derived from the nonionic non-crosslinkable monomer and no less than 0.05 mol% of a constitutional unit derived from the nonionic crosslinkable monomer.

The monomer mixture refers to the entire polymerizable monomer that forms a polymer as a main component of the crosslinked polymer, and the total amount of monomers that form the polymer is 100 mol%. The monomer mixture contains at least a nonionic non-crosslinkable monomer and a nonionic crosslinkable monomer. In addition, both the nonionic non-crosslinkable monomer and the nonionic crosslinkable monomer are polymerizable monomers (monomers having an unsaturated double bond). The nonionic crosslinkable monomer is, for example, a monomer having two or more unsaturated double bonds and playing a role of crosslinking main chains.

In an embodiment, in the monomer mixture, a content of an anionic monomer is no more than 59.95 mol% (lower limit: 0 mol%). That is, the monomer mixture may or may not contain the anionic monomer.

In an embodiment, in the monomer mixture, the content of the anionic monomer is no more than 20 mol% (lower limit: 0 mol%). Further, in a preferred embodiment, the crosslinked polymer includes no less than 50 mol% of a constitutional unit derived from the nonionic non-crosslinkable monomer and no less than 0.1 mol% of a constitutional unit derived from the nonionic crosslinkable monomer, and includes no more than 20 mol% (lower limit: 0 mol%) of a constitutional unit derived from the anionic monomer. Hereinafter, an aspect in which the content of the anionic monomer is no more than 20 mol% in the monomer mixture is also referred to as Aspect 1.

In another embodiment, the content of the anionic monomer in the monomer mixture is more than 20 mol% and no more than 59.95 mol%, and a content of the nonionic crosslinkable monomer is no less than 0.5 mol%. Hereinafter, an aspect in which the content of the anionic monomer is more than 20 mol% and 59.95 mol% or less, and the content of the nonionic crosslinkable monomer is 0.5 mol% or more in the monomer mixture is also referred to as Aspect 2.

The constitutional unit derived from the nonionic non-crosslinkable monomer, the constitutional unit derived from the nonionic crosslinkable monomer, and the constitutional unit derived from the anionic monomer may be considered to coincide with the molar ratio of each monomer at the time of preparation for production. That is, another embodiment is a shrinkage reducing agent including a crosslinked polymer, wherein the crosslinked polymer has no less than 40 mol% of a constitutional unit derived from a nonionic non-crosslinkable monomer and no less than 0.05 mol% of a constitutional unit derived from a nonionic crosslinkable monomer, and a constitutional unit derived from an anionic monomer is no more than 59.95 mol%.

(Nonionic non-crosslinkable monomer)

The nonionic non-crosslinkable monomer is a main component of a monomer component constituting the crosslinked polymer. The nonionic non-crosslinkable monomer refers to a monomer having one unsaturated double bond in the monomer.

The nonionic non-crosslinkable monomer is preferably water-soluble because it can further exhibit the effect of the present invention. Hereinafter, the nonionic non-crosslinkable monomer that is water-soluble is also referred to as a water-soluble nonionic non-crosslinkable monomer. Here, "water-soluble" in the water-soluble nonionic non-crosslinkable monomer means that no less than 5 g of the monomer is dissolved in 100 g of water at 25°C. The water-soluble nonionic non-crosslinkable monomer is dissolved in an amount of preferably no less than 10 g, more preferably no less than 50 g, further preferably no less than 100 g in 100 g of water.

The nonionic non-crosslinkable monomer is not particularly limited as long as it has one unsaturated double bond in the monomer. The nonionic non-crosslinkable monomer suitably excludes N-vinylacylamides. Specific examples of the nonionic non-crosslinkable monomer include (meth)acrylamide-based monomers such as (meth)acrylamide, N-monomethyl (meth)acrylamide, N-monoethyl (meth)acrylamide, N,N-hydroxymethyl (meth)acrylamide, and N,N-dimethyl (meth)acrylamide; N-vinyl lactam-based monomers such as N-vinylpyrrolidone; hydroxy (meth)acrylates such as hydroxyethyl (meth)acrylate, hydroxypropyl (meth)acrylate, hydroxybutyl (meth)acrylate, and hydroxypentyl (meth)acrylate; unsaturated amines such as N-(2-dimethylaminoethyl) (meth)acrylamide, vinylpyridine, and vinylimidazole; vinyl cyanide-based monomers such as acrylonitrile and methacrylonitrile; unsaturated polyalkylene glycol alkenyl ether-based monomer represented by the following general formula (1);

[Chemical Formula 1]

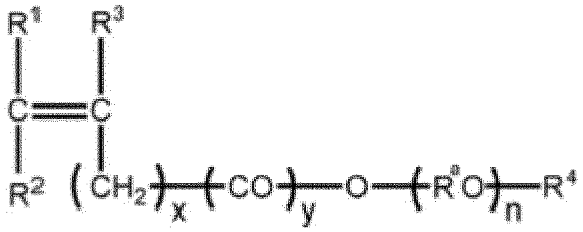

(1)

(in the general formula (1), $R^1$, $R^2$, and $R^3$ independently represent a hydrogen atom or a methyl group, $R^4$ represents a hydrogen atom or a hydrocarbon group having 1 to 30 carbon atoms, $R^aO$, the same or different, represents an oxyalkylene group having 2 to 18 carbon atoms, n represents an average number of moles of the added oxyalkylene group represented by $R^aO$, n is a number of 1 to 500, x is an integer of 0 to 2, and y is 0 or 1), and the like. They can be used singly, or in a mixture of two or more kinds thereof.

In the general formula (1), $R^4$ represents a hydrogen atom or a hydrocarbon group having 1 to 30 carbon atoms. Here, examples of the hydrocarbon group having 1 to 30 carbon atoms include an alkyl group having 1 to 30 carbon atoms (aliphatic alkyl group or alicyclic alkyl group), an alkenyl group having 1 to 30 carbon atoms, an alkynyl group having 1 to 30 carbon atoms, an aromatic group having 6 to 30 carbon atoms, and the like. From the viewpoint that the effect of the present invention can be further exhibited, $R^4$ is preferably a hydrogen atom or a hydrocarbon group having 1 to 20 carbon atoms, more preferably a hydrogen atom or a hydrocarbon group having 1 to 12 carbon atoms, further preferably a hydrogen atom or a hydrocarbon group having 1 to 10 carbon atoms, and particularly preferably a hydrogen atom or an alkyl group having 1 to 6 carbon atoms. In the general formula (1), n is a number of 1 to 500, preferably 10 to 300, and more preferably 10 to 100. $R^aO$, the same or different, represents an oxyalkylene group having 2 to 18 carbon atoms, preferably an oxyalkylene group having 2 to 8 carbon atoms, and more preferably an oxyalkylene group having 2 to 4 carbon atoms. The addition form of $R^aO$ may be any form of random addition, block addition, alternate addition, and the like. In order to ensure the balance between hydrophilicity and hydrophobicity, it is preferable that an oxyethylene group be contained in the oxyalkylene group as an essential component, it is more preferable that no less than 50 mol% of the entire oxyalkylene group be an oxyethylene group, it is further preferable that no less than 90 mol% of the entire oxyalkylene group be an oxyethylene group, and it is particularly preferable that 100 mol% of the entire oxyalkylene group be an oxyethylene group. The unsaturated polyalkylene glycol alkenyl ether-based monomer represented by the general formula (1) can be produced by a conventionally known method.

In addition, because water absorption performance is suppressed at an initial stage, it is preferable that the nonionic non-crosslinkable monomer be not hydrolyzed in the case of immersion in an aqueous solution having a pH of 12.9 at 25°C for 2 hours. Here, "not hydrolyzed" means that the hydrolyzed ratio (hydrolysis rate) is no more than 5 mass%. Because the nonionic non-crosslinkable monomer maintains the structure by not causing hydrolysis in 2 hours, it is difficult to exhibit water absorbability at an initial stage. Examples of the nonionic non-crosslinkable monomer that is not hydrolyzed at an initial stage include acrylamide, N,N-hydroxymethyl (meth)acrylamide, and the like.

In addition, because of further excellent shrinkage reduction effect, the nonionic non-crosslinkable monomer preferably contains at least one selected from the group consisting of a (meth)acrylamide-based monomer, a hydroxy(meth)acrylate, and an unsaturated polyalkylene glycol alkenyl ether-based monomer represented by the general formula (1), more preferably contains a (meth)acrylamide-based monomer, still more preferably contains (meth)acrylamide, and particularly preferably contains acrylamide. Further, the nonionic non-crosslinkable monomer may be only (meth)acrylamide or only acrylamide. In another preferred embodiment, the nonionic non-crosslinkable monomer is in a form in which a (meth)acrylamide-based monomer and an unsaturated polyalkylene glycol alkenyl ether-based monomer represented by the general formula (1) are used in combination.

In the monomer mixture, the content of the nonionic non-crosslinkable monomer is no less than 40 mol%. When the content of the nonionic non-crosslinkable monomer is no less than 40 mol%, the viscosity/fluidity of the cement composition at an initial stage hardly changes by addition. The content of the nonionic non-crosslinkable monomer in the monomer mixture is, in the preferred order, no less than 50 mol%, no less than 60 mol%, no less than 70 mol%, no less than 75 mol%, no less than 80 mol%, no less than 85 mol%, no less than 90 mol%, no less than 93 mol%, no less than 95 mol%, no less than 97 mol%, no less than 98 mol%, and no less than 99 mol% because water absorption performance is suppressed at an initial stage. The upper limit of the content of the nonionic non-crosslinkable monomer in the monomer mixture is preferably no more than 99.95 mol% from the viewpoint of securing the water absorption performance. The content of the nonionic non-crosslinkable monomer may be no more than 99.85 mol%. As the content of each monomer in the monomer mixture, a value obtained up to the second decimal place is adopted.

(Nonionic Crosslinkable Monomer)

The nonionic crosslinkable monomer is a monomer having two or more polymerizable unsaturated groups. A crosslinked structure (crosslinked body) is formed by the nonionic crosslinkable monomer, and the water absorption performance improves.

The nonionic crosslinkable monomer is preferably water-soluble because it can further exhibit the effect of the present invention. Hereinafter, the nonionic crosslinkable monomer that is water-soluble is also referred to as a water-soluble nonionic crosslinkable monomer. Here, "water-soluble" in the water-soluble nonionic crosslinkable monomer refers to a monomer that dissolves in an amount of no less than 5 g in 100 g of water. The water-soluble nonionic crosslinkable monomer is preferably dissolved in an amount of no less than 10 g, more preferably no less than 50 g, and further preferably no less than 100 g in 100 g of water.

The nonionic crosslinkable monomer is not particularly limited, but is preferably a compound having two or more polymerizable unsaturated groups. Examples thereof include (meth)acrylamide-based monomers such as N,N'-methylenebis(meth)acrylamide; polyfunctional (meth)acrylates such as (poly)ethyleneglycoldi(meth)acrylate such as diethyleneglycoldiacrylate, (poly)propyleneglycoldi(meth)acrylate, trimethylolpropanetri(meth)acrylate, ethylene oxide-modified trimethylolpropanetri(meth)acrylate, and pentaerythritolhexa(meth)acrylate; allyl esters of cyanuric acid or isocyanuric acid such as triallyl cyanurate and triallyl isocyanurate; and the like. They can be used singly, or in a mixture of two or more kinds thereof.

Among them, the nonionic crosslinkable monomer is preferably a (meth)acrylamide-based monomer, an allyl ester of cyanuric acid or isocyanuric acid and polyfunctional (meth)acrylate, and a suitable nonionic non-crosslinkable monomer is a (meth)acrylamide-based monomer. Because shrinkage suppression further improves, the nonionic crosslinkable monomer also preferably contains a (meth)acrylamide-based monomer, more preferably contains N,N'-methylenebis (meth)acrylamide, and still more preferably contains N,N'-methylenebisacrylamide. Further, the nonionic crosslinkable monomer may be only a (meth)acrylamide-based monomer, only N,N'-methylenebis(meth)acrylamide, or only N,N'-methylenebisacrylamide.

The content of the nonionic crosslinkable monomer in the monomer mixture is no less than 0.05 mol%. When the content of the nonionic crosslinkable monomer is no less than 0.05 mol%, the effect of the present invention is exhibited. Because the effect of the present invention that shrinkage suppression is excellent is further exhibited, the content of the nonionic crosslinkable monomer in the monomer mixture is, in the preferred order, no less than 0.1 mol%, no less than 0.15 mol%, no less than 0.2 mol%, and no less than 0.5 mol%. From the viewpoint that the viscosity of the cement composition at an initial stage of addition is low, the content of the nonionic crosslinkable monomer in the monomer mixture may be no less than 0.8 mol%, or may be no less than 1.0 mol%. It is considered that by having a high-density crosslinked structure, the water retained by the crosslinked polymer can be gradually released into the cement composition, and the shrinkage improves. In addition, the content of the nonionic crosslinkable monomer in the monomer mixture is preferably no more than 8.0 mol%, more preferably no more than 5.0 mol%, and further preferably no more than 3.0 mol%, from the viewpoint of water absorption performance.

The entire amount of the nonionic crosslinkable monomer may be added to the nonionic non-crosslinkable monomer aqueous solution after preparation before polymerization step, or a part thereof may be added after the initiation of polymerization.

(Anionic Monomer)

The anionic monomer refers to a monomer having an anionic functional group or a salt group thereof in the monomer. The anionic functional group means a functional group in which a counter ion is dissociated to become an anion (anionized).

Examples of the anionic functional group or a salt group thereof include a sulfonic acid (salt) group, a sulfuric acid (salt) group, a phosphoric acid (salt) group, a phosphonic acid (salt) group, a carboxylic acid (salt) group (carboxyl group or a salt group thereof), and the like.

Examples of the anionic monomer include anionic unsaturated monomers such as (meth)acrylic acid, maleic acid (maleic anhydride), itaconic acid, cinnamic acid, vinylsulfonic acid, allyl toluene sulfonic acid, vinyl toluene sulfonic acid, styrenesulfonic acid, methallylsulfonic acid, sodium 2-sulfoethyl methacrylate, 2-hydroxy-3-allyloxypropanesulfonic acid, isoprenesulfonic acid, 2-(meth)acrylamide-2-methylpropanesulfonic acid, 2-(meth)acryloyl ethanesulfonic acid, 2-(meth)acryloylpropanesulfonic acid, 2-hydroxyethyl(meth)acryloyl phosphate, mono(2-hydroxyethyl) methacrylate phosphate, mono(2-hydroxyethyl) acrylate phosphate, polyalkyleneglycol mono(meth)acrylate acid phosphoric acid ester, and the like, and salts thereof.

In the present embodiment, since the content of the nonionic non-crosslinkable monomer is no less than 40 mol% and the content of the nonionic crosslinkable monomer is no less than 0.05 mol% in the monomer mixture, the content of the anionic monomer in the monomer mixture is no more than 59.95 mol%. When the content of the anionic

monomer in the monomer mixture is no more than 59.95 mol%, initial water absorption by the crosslinked polymer is suppressed, and shrinkage suppression is exhibited.

In the present embodiment, a cationic monomer may be contained in addition to the nonionic monomer and the anionic monomer. The cationic monomer refers to a monomer having a cationic functional group or a salt group thereof in the monomer. The cationic functional group means a functional group in which a counter ion is dissociated to become a cation (cationized).

Examples of the cationic monomer include quaternized N-vinylimidazole, quaternized N-allylimidazole, quaternized 4-vinylpyridine, quaternized 1-[2-(acryloyloxy)ethyl]-1H-imidazole, 1-[2-(methacryloyloxy)ethyl]-1H-imidazole, and salts thereof.

In the present embodiment, the content of the cationic monomer in the monomer mixture is preferably no more than 20 mol%, and is, in the preferred order, less than 10 mol%, no more than 5 mol%, no more than 4 mol%, no more than 3 mol%, no more than 2 mol%, no more than 1 mol%, and 0 mol% (that is, not containing a cationic monomer).

A preferred embodiment of the present invention is an embodiment in which the crosslinked polymer does not contain an ionic monomer (an anionic monomer and a cationic monomer), that is, the crosslinked polymer is formed by polymerizing a nonionic non-crosslinkable monomer and a nonionic crosslinkable monomer.

(Aspect 1: In the monomer mixture, the content of the anionic monomer is no more than 20 mol%)

In the monomer mixture, the content of the nonionic non-crosslinkable monomer is no less than 40 mol%. The content of the nonionic non-crosslinkable monomer in the monomer mixture is, in the preferred order, no less than 75 mol%, no less than 80 mol%, no less than 85 mol%, no less than 90 mol%, no less than 93 mol%, no less than 95 mol%, no less than 97 mol%, no less than 98 mol%, and no less than 99 mol% because water absorption performance is suppressed at an initial stage. The upper limit of the content of the nonionic non-crosslinkable monomer in the monomer mixture is preferably no more than 99.95 mol%, and more preferably no more than 99.85 mol%, from the viewpoint of securing the water absorption performance. As the content of each monomer in the monomer mixture, a value obtained up to the second decimal place is adopted.

Because the effect of the present invention of shrinkage reduction (in particular, autogenous shrinkage reduction) is further exhibited, the content of the nonionic crosslinkable monomer in the monomer mixture is, in the preferred order, no less than 0.05 mol%, no less than 0.1 mol%, and no less than 0.15 mol%. It is considered that by having a high-density crosslinked structure, initial water absorption performance is suppressed, and the water retained by the crosslinked polymer can be gradually released into the cement composition after a period of time, and the shrinkage further decreases. In addition, the content of the nonionic crosslinkable monomer in the monomer mixture is, in the preferred order, no more than 10 mol%, no more than 8 mol%, no more than 5 mol%, no more than 3 mol%, no more than 2 mol%, no more than 1.5%, and no more than 1 mol% from the viewpoint of water absorption performance.

From the viewpoint of shrinkage reduction, the content of the anionic monomer in the monomer mixture is, in the preferred order, no more than 15 mol%, no more than 10 mol%, less than 10 mol%, no more than 5 mol%, no more than 4 mol%, no more than 3 mol%, no more than 2 mol%, no more than 1 mol%, and is most preferably 0 mol% (that is, not containing an anionic monomer).

(Aspect 2: In the monomer mixture, the content of the anionic monomer is more than 20 mol% and no more than 59.95 mol%, and the content of the nonionic crosslinkable monomer is no less than 0.5 mol%)

This aspect is a region in which the content of the anionic monomer is high in the monomers to be constituted. In the region where the amount of the anionic monomer is large, the content of the nonionic crosslinkable monomer is preferably no less than 0.5 mol% for the purpose of suppressing initial water absorption performance.

In Aspect 2, the content of the nonionic non-crosslinkable monomer in the monomer mixture is preferably 40 to 75 mol%, more preferably 40 to 70 mol%, and still more preferably 40 to 65 mol%.

Because the effect of the present invention of shrinkage reduction (in particular, autogenous shrinkage reduction) is further exhibited, the content of the nonionic crosslinkable monomer in the monomer mixture is, in the preferred order, no less than 0.05 mol%, no less than 0.1 mol%, no less than 0.15 mol%, no less than 0.2 mol%, and no less than 0.5 mol%. It is considered that by having a high-density crosslinked structure, initial water absorption performance is suppressed, and the water retained by the crosslinked polymer can be gradually released into the cement composition after a period of time, and the shrinkage further decreases. In addition, the content of the nonionic crosslinkable monomer in the monomer mixture is preferably no more than 5 mol%, more preferably no more than 3 mol%, and still more preferably no more than 1.5 mol%, from the viewpoint of water absorption performance.

(Method for Producing Crosslinked Polymer)

The method for producing the crosslinked polymer is not particularly limited, and the crosslinked polymer can be produced by a conventionally known method. Examples of the polymerization method for obtaining the crosslinked polymer include spray polymerization, droplet polymerization, bulk polymerization, precipitation polymerization, aqueous solution polymerization, reversed phase suspension polymerization, and the like. Here, as an example, a production method using aqueous solution polymerization is described.

(1) Preparation Step of Monomer Mixture Aqueous Solution

This step is a step of preparing a monomer mixture aqueous solution by dissolving each monomer constituting a polymer in water as a solvent.

The monomers may be added collectively or sequentially. Here, the aqueous solution is a concept including an aqueous dispersion. The monomer mixture aqueous solution may contain a component constituting a cement additive such as a trace component (chelating agent, surfactant, dispersant, and the like) and the like as necessary.

In the "aqueous solution" in the monomer mixture aqueous solution, 100 mass% of the solvent is not limited to water, and 0 to 30 mass%, preferably 0 to 5 mass% of a water-soluble organic solvent (for example, alcohol and the like) may be used in combination, and these are treated as an aqueous solution in the present invention.

(2) Aqueous Solution Polymerization Step

Aqueous solution polymerization is a method of polymerizing a monomer aqueous solution without using a dispersion solvent, and is disclosed in, for example, U.S. Patent Nos. 4625001, 4873299, 4286082, 4973632, 4985518, 5124416, 5250640, 5264495, 5145906, 5380808, European Patent Nos. 0811636, 0955086, 0922717, and the like.

The concentration of the monomer aqueous solution at the polymerization is not particularly limited and is preferably no less than 20 mass% and no more than a saturated concentration, more preferably 25 to 80 mass%, and further preferably 30 to 70 mass%. When the concentration is no less than 20 mass%, a decrease in productivity can be suppressed. Polymerization in a slurry of monomers (aqueous dispersion) is preferably performed at a concentration of no more than a saturated concentration because physical properties deteriorate.

In the polymerization step, a polymerization initiator is added to the monomer mixture aqueous solution obtained as described above.

The polymerization initiator to be used is appropriately determined depending on the polymerization form, and is not particularly limited, and examples thereof include a photolytic polymerization initiator, a thermal decomposition polymerization initiator, a redox polymerization initiator, and the like. Polymerization is initiated by these polymerization initiators.

Examples of the photolytic polymerization initiator include benzoin derivatives, benzyl derivatives, acetophenone derivatives, benzophenone derivatives, azo compounds, and the like. Specifically, the examples include benzoin, benzoin methyl ether, benzoin ethyl ether, benzoin isopropyl ether, α-methylbenzoin, α-phenylbenzoin, anthraquinone, methylanthraquinone, acetophenone, 2,2-diethoxyacetophenone, 2,2-dimethoxy-2-phenylacetone, benzyldiacetylacetophenone, benzophenone, p-chlorobenzophenone, 2-hydroxy-2-methylpropiophenone, diphenyl disulfide, tetramethylthiuram sulfide, α-chloromethylnaphthalene, anthracene, hexachlorobutadiene, pentachlorobutadiene, Michler's ketone, 2-chlorothioxanthone, 2,4-diethylthioxanthone, benzyldimethylketal, bis(2,4,6-trimethylbenzoyl)-phenylphosphine oxide, 2-methyl-1-[4-(methylthio)phenyl]-2-morpholinopropanone-1,2-hydroxy-2-methyl-1-phenylpropan-1-one, 1-[4-(2-hydroxyethoxy)-phenyl]-2-hydroxy-2-methyl-1-propan-1-one, and the like. Such a photolytic polymerization initiator may be a commercially available product, and examples thereof include product names Irgacure (registered trademark) 184 (hydroxycyclohexyl-phenyl ketone) and Irgacure (registered trademark) 2959 (1-[4-(2-hydroxyethoxy)-phenyl]-2-hydroxy-2-methyl-1-propan-1-one) and the like, which are manufactured by Ciba Specialty Chemicals Inc.

Examples of the thermal decomposition polymerization initiator include persulfates such as sodium persulfate, potassium persulfate, and ammonium persulfate; peroxides such as hydrogen peroxide, t-butyl peroxide, and methyl ethyl ketone peroxide; azo compounds such as 2,2'-azobis(2-amidinopropane)dihydrochloride and 2,2'-azobis[2-(2-imidazolin-2-yl)propane]dihydrochloride; and the like.

Furthermore, examples of the redox polymerization initiator include a system in which a reducing compound such as L-ascorbic acid, sodium bisulfite, and the like is used in combination with the persulfate or peroxide.

The photolytic polymerization initiator and the thermal decomposition polymerization initiator may be used in combination. Further, an active energy ray such as ultraviolet ray, electron beam, and γ-ray may be used singly or in combination with the polymerization initiator.

The used amount of the polymerization initiator is preferably 0.0001 to 1 mol% and more preferably 0.0005 to 0.5 mol% with respect to the monomer.

The polymerization step can be performed at normal pressure, at reduced pressure, or under pressure, but is preferably performed at normal pressure (or the vicinity thereof, usually ± 10 mmHg) . The temperature at the start of polymerization is preferably 15 to 130°C, more preferably 20 to 120°C although it depends on the type of polymerization initiator used.
In this way, a gel-like crosslinked polymer is obtained.

(3) Gel-crushing Step

This step is an optional step of gel- crushing the gel-like crosslinked polymer (hereinafter, referred to as "hydrogel") obtained through the polymerization step and the like (in particular, aqueous solution polymerization) to obtain a hydrogel in a particulate form (hereinafter, referred to as "particulate hydrogel").
The gel crusher that can be used is not particularly limited, and examples thereof include a gel crusher including a plurality of rotary stirring blades such as a batch-type or continuous double-arm kneader, a single-screw extruder, a twinscrew extruder, a meat chopper, and the like. Among them, a screw type extruder having a porous plate at the tip is preferable, and examples thereof include a screw type extruder disclosed in JP 2000-063527 A.

(4) Drying Step

This step is a step of drying the hydrogel obtained through the polymerization step and the like to obtain a dry polymer. When the polymerization step is aqueous solution polymerization, gel crush (grain refining) is performed before and/or after drying the hydrogel. The dry polymer (aggregate) obtained in the drying step may be supplied to the pulverization step as it is.
The drying method is not particularly limited, and various methods can be adopted. Specific examples thereof include heat drying, hot air drying, reduced pressure drying, infrared drying, microwave drying, azeotropic dehydration drying in a hydrophobic organic solvent, high humidity drying using high temperature water vapor, and the like, and one or two of these can be used in combination. The drying temperature is preferably 100 to 300°C, more preferably 120 to 250°C. In addition, the drying time depends on the surface area and water content of the hydrogel, the type of dryer, and the like, but is preferably, for example, 1 minute to 5 hours.

(5) Pulverization/Classification Step

This step is a step of pulverizing and/or classifying the dried polymer obtained in the drying step to obtain a water-absorbent resin preferably having a specific particle size. The step is different from the step (3) gel crushing step in that the object to be pulverized has gone through a drying step.
The control of the particle size can be performed in the polymerization step, the gel crushing step or in the pulverization/classification step of the drying step, and is particularly preferably performed in the classification step after drying.

[Cement Composition]

A cement composition of the present invention contains the shrinkage reducing agent of the present invention, cement, and water.
Examples of the cement include: Portland cement (normal, fast, ultra fast, medium heat, sulphate resistant and low alkali forms thereof); various mixed cements (blast furnace cement, silica cement, fly ash cement); white Portland cement; alumina cement; ultra rapid hardening cements (clinker type 1 rapid hardening cement, clinker type 2 rapid hardening cement, magnesium phosphate cement); cement for grouting; well cement; low-heat cement (low heat generation type blast furnace cement, fly ash mixed low heat generation type blast furnace cement, high belite content cement); ultra-high strength cement; cement-based solidification material; ecocement (cement produced from one or more types of incinerated ash of municipal waste and incinerated ash of sewage sludge as raw materials), and the like, and materials and the like in which fine powders such as blast furnace slag, fly ash, cinder ash, clinker ash, husk ash, silica fume, silica powder, limestone powder, and the like, and gypsum is added to these cements.
The cement composition may contain an aggregate. Examples of the aggregate include fire resistant aggregates of silica stone, clay, zircon, high alumina, silicon carbide, graphite, chromium, chrome-magnesia, magnesia, and the like in addition to gravel, crushed stone, water-crushed slag, regenerated aggregate, and the like.
In the cement composition, the unit water amount per 1 $m^3$, the amount of cement to be used, and the water/cement ratio are not particularly limited, and for example, it is preferable that the unit water amount is 100 to 185 $kg/m^3$, the amount of cement to be used is 250 to 800 $kg/m^3$, and the water/cement ratio (mass ratio) is 0.1 to 0.7. More preferably, the unit water amount is 100 to 175 $kg/m^3$, the amount of cement to be used is 250 to 800 $kg/m^3$, and the

water/cement ratio (mass ratio) is 0.1 to 0.65. In this way, the cement composition of the present invention can be widely used from poor mixing to rich mixing, and is effective for both high-strength concrete having a large unit cement amount and poor mixing concrete having a unit cement amount of no more than 300 kg/$m^3$. In addition, the cement composition of the present invention can be favorably used in a region of a relatively high water reduction rate, that is, a region of a low water/cement ratio such as a water/cement ratio (mass ratio) of 0.10 to 0.5 (preferably 0.15 to 0.4). Further, the cement composition of the present invention can be favorably used in a region of an ultra-high strength cement, that is, a region of a low water/cement ratio such as a water/cement ratio (mass ratio) of 0.10 to 0.30 (preferably 0.15 to 0.25).

In addition, since the cement composition of the present invention can exhibit various kinds of excellent performance at a high degree even in a high water reduction rate region and has excellent workability, it can be effectively applied to, for example, ready mixed concrete, concrete for concrete secondary products (precast concrete), concrete for centrifugal molding, concrete for vibration compaction, steam-cured concrete, concrete for spraying, and the like. The cement composition may also be effective for mortar and concrete that are required to have high fluidity, such as medium-flow concrete (concrete having a slump value in the range of 22 to 25 cm), high-flow concrete (concrete having a slump-value of no less than 25 cm and a slump-flow value of in the range of 50 to 70 cm), self-filling concrete, and self-leveling material, and the like.

In the cement composition, the blending ratio of the shrinkage reducing agent of the present invention is preferably set such that, for example, the shrinkage reducing agent which is an essential component of the present invention (when a plurality of shrinkage reducing agents are contained, the total amount thereof) is 0.01 to 1 mass% with respect to 100 mass% of the total amount of cement mass in terms of solid content. The content is more preferably 0.1 to 0.8 mass%, still more preferably 0.2 to 0.5 mass%, and particularly preferably 0.25 to 0.4 mass%. The blending ratio of the cement dispersant and the shrinkage reducing agent of the present invention is preferably set to be, for example, 0.001 to 100% with respect to the cement dispersant. The content is more preferably 0.01 to 80%, more preferably 2 to 50%, and still more preferably 2.5 to 40%.

(Cement Dispersant)

It is desirable that the cement composition of the present invention further contains a cement dispersant that is commonly used, in addition to the shrinkage reducing agent of the present invention. It is also possible to use a plurality of types of cement dispersants in combination. As the cement dispersant, a conventionally known cement dispersant can be used. Examples of the cement dispersant include polyalkylarylsulfonic acid salt-based dispersants such as naphthalenesulfonic acid formaldehyde condensate; melamine formalin resin sulfonic acid salt-based dispersants such as melamine sulfonic acid formaldehyde condensate; aromatic aminosulfonic acid salt-based dispersants such as aminoarylsulfonic acid-phenol-formaldehyde condensate; lignin sulfonic acid-based dispersants such as lignin sulfonate salt and modified lignin sulfonate salt; various sulfonic acid-based dispersants having sulfonic acid groups in the molecule such as polystyrene sulfonic acid salt-based dispersant; polyalkylene glycol mono (meth)acrylic acid-based ester monomers, (meth)acrylic acid-based monomers, and copolymers obtained from monomers copolymerizable with these monomers as described in JP S59-18338 A and JP H7-223852 A; various polycarboxylic acid-based dispersants having a (poly)oxyalkylene group and a carboxyl group in a molecule such as a copolymer obtained from unsaturated (poly)alkylene glycol ether-based monomer, a maleic acid-based monomer, or (meth)acrylic acid-based monomer as described in JP H10-236858 A, JP 2001-220417 A, JP 2002-121055 A, JP 2002-121056 A, and JP 2018-111622 A; various phosphoric acid-based dispersants having a (poly) oxyalkylene group and a phosphoric acid group in a molecule such as a copolymer obtained from (alkoxy)polyalkylene glycol mono (meth)acrylate, a phosphoric acid monoester-based monomer, and a phosphoric acid diester-based monomer as described in JP 2006 -52381A, a phosphoric acid-based dispersant described in JP 2008-517080 A, and the like. Among them, as the cement dispersant, a polycarboxylic acid-based dispersant is preferably used because the effect of the present invention is further exhibited. The cement dispersant may be used singly, or in combination of two or more kinds thereof.

Among the cement dispersants exemplified above, a polycarboxylic acid-based cement dispersants is particularly preferable because it is excellent in water reducing performance and is excellent in slump-holding performance. As a result, a cement composition having excellent fluidity and excellent strength, resistance to freezing and thawing, and the like can be obtained.

The polycarboxylic acid-based cement dispersant is a polymer obtained by polymerizing a monomer component containing an unsaturated carboxylic acid (salt). Examples of the polycarboxylic acid-based cement dispersant include: copolymers of polyethylene glycol monoallyl ether and maleic acid (salt); copolymers obtained by copolymerizing monomer components including polyalkylene glycol (meth)allyl ether or polyalkylene glycol (meth)acrylate, unsaturated sulfonate, and (meth)acrylate; copolymers of (meth)acrylamide and (meth)acrylic acid (salt); copolymers obtained by copolymerizing monomer components including (meth)acrylamide having a sulfonate group, (meth)acrylic acid ester, and (meth)acrylic acid (salt); copolymers of polyalkylene glycol vinyl ether or polyalkylene glycol (meth)allyl ether and (meth)acrylic acid (salt); copolymers of polyalkylene glycol (meth)acrylate and (meth)acrylic acid (salt); copolymers

obtained by polymerizing a monomer component containing an unsaturated carboxylic acid (salt) and a monomer having a polyalkylene glycol chain as essential components, and the like.

Among the above examples, a copolymer obtained by polymerizing a monomer component containing an unsaturated carboxylic acid (salt) and a monomer having a polyalkylene glycol chain as essential components is preferable. Examples of the unsaturated carboxylic acid (salt) include acrylic acid, methacrylic acid, crotonic acid, itaconic acid, maleic acid, citraconic acid, and the like, and neutralized products and partially neutralized products thereof, and one kind or two or more kinds thereof can be used. Examples of the monomer having a polyalkylene glycol chain include: hydroxyalkyl (meth)acrylates such as hydroxyl ethyl (meth)acrylate; polyalkylene glycol mono(meth)acrylate such as ethylene glycol mono(meth)acrylate and polyethylene glycol/polypropylene glycol mono(meth)acrylate; alkoxypolyalkylene glycol mono(meth)acrylates such as methoxy polyethylene glycol mono(meth)acrylate and ethoxy polyethylene glycol mono(meth)acrylate; polyalkylene glycol mono(meth)allyl ethers such as ethylene glycol mono(meth)allyl ether; alkoxypolyalkylene glycol mono(meth)allyl ethers such as methoxypolyethylene glycol mono(meth)allyl ether; polyalkylene glycol monocrotyl ethers such as ethylene glycol monocrotyl ether; alkoxypolyalkylene glycol monocrotyl ethers such as methoxy polyethylene glycol monocrotyl ether, and the like, and one kind or two or more kinds thereof can be used. These polycarboxylic acid-based cement dispersants may be used alone, or two or more thereof may be appropriately mixed and used.

In the cement composition, the blending ratio of the cement dispersant of the present invention is preferably set such that, for example, the cement dispersant is 0.01 to 10 mass% with respect to 100 mass% of the total amount of cement mass in terms of solid content. When the content is less than 0.01 mass%, there is a possibility that the performance is not sufficient. On the other hand, when the content exceeds 10 mass%, there is a possibility that the effect is substantially peaked and it is disadvantageous from the viewpoint of economic efficiency. The content is more preferably 0.02 to 5 mass%, and still more preferably 0.05 to 3 mass%. In the present specification, the solid content can be measured as follows.

(Solid Content Measurement Method)

1. Precisely weigh an aluminum dish.
2. Precisely weigh a material whose solid content is to be measured on the aluminum dish precisely weighed in 1.
3. Place the material whose solid content is to be measured precisely weighed in 2 in a dryer adjusted to 130°C under a nitrogen atmosphere for 1 hour.
4. After 1 hour, remove the material from the dryer and allow it to cool in a desiccator at room temperature for 15 minutes.
5. After 15 minutes, take out the material from the desiccator, and precisely weigh the aluminum dish and the material to be measured.
6. Subtract the mass of the aluminum dish obtained in 1 from the mass obtained in 5, and divide the obtained value by the mass of the material whose solid content is to be measured obtained in 2 to measure the solid content.

(Other Materials Contained in Cement Composition)

The cement composition of the present invention may contain, for example, one or two or more of water-soluble polymer substances, polymer emulsions, retarders, fast acting agents/accelerators, mineral oil-based antifoamers, oil-based antifoamers, fatty acid-based antifoamers, fatty acid ester-based antifoamers, oxyalkylene-based antifoamers, alcohol-based antifoamers, amide-based antifoamers, phosphoric acid ester-based antifoamers, metal soap-based antifoamers, silicone-based antifoamers, AE agents, surfactants, waterproofing agents, crack reducing agents, expansion materials, cement wetting agents, thickeners, separation reducing agents, flocculants, drying shrinkage reducing agents, strength enhancers, self-leveling agents, rust inhibitors, colorants, antifungal agents, blast furnace slag, and the like.

The blending ratio of these materials is not particularly limited, but is preferably set to no more than 10 mass% with respect to 100 mass% of the solid content of the cement dispersant.

When the cement composition of the present invention is produced, the shrinkage reducing agent, cement, and water may be mixed at a time, or the shrinkage reducing agent may be added after cement and water are mixed. In addition, the cement dispersant may be added together with the shrinkage reducing agent, cement, and water, or may be added separately. The other materials to be contained in the cement composition may be added together with the shrinkage reducing agent, cement, and water, or may be added separately.

Since the shrinkage reducing agent of the present invention contains a crosslinked polymer having a specific composition, the shrinkage reducing agent does not reduce the fluidity of the cement composition while having a high absorbent action, and thus, the shrinkage reducing agent that has absorbed water is uniformly dispersed in the cement

composition without being unevenly distributed, whereby water can be uniformly dispersed in the cement composition.

As a result, hydration of cement and water occurs uniformly in the cement composition, and thus, autogenous shrinkage occurs uniformly in the cement composition, and cracking and a decrease in strength of concrete are prevented.

In addition, since water is uniformly dispersed in the cement composition, the distribution of pores remaining in the concrete after water evaporates becomes uniform, and thus, the effect that the strength of the concrete does not become weak at a specific site can be exhibited. Since the viscosity increase of the cement composition at the time of addition can be suppressed, there is no problem of blending unlike other crosslinked polymers.

Therefore, a cement composition containing the shrinkage reducing agent of the present invention is suitably used in the fields of civil engineering, construction, and the like.

In addition, a configuration in which a crosslinked polymer formed by polymerizing a monomer mixture containing no less than 40 mol% of a nonionic non-crosslinkable monomer and no less than 0.05 mol% of a nonionic crosslinkable monomer is contained, and a water absorption ratio when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 20 g/g, and other suitable aspects can be used as a strength improving agent, a durability improving agent (e.g., a salt inhibitor, a neutralization inhibitor, an anti-freezing agent, an alkali aggregate reaction inhibitor, a chemical concrete corrosion inhibitor, a chloride permeation resistance improver, and the like), a crack preventing agent (or a crack reducing agent, a crack repairing agent, or the like), a self-healing agent, an air amount stabilizing agent, a workability adjusting agent (or a thickener, a consistency modifier, a viscosity modifier, or a moisture modifier), a bleeding suppressing agent (or a separated water reducing agent), an additive for soil granulation (or a soil solidifying agent, a granulation treatment agent, a raw concrete coagulant, a sludge solidifying agent, or a leftover soil improver), an additive for grout materials, an additive for graft water retention materials, an additive for void fillers, an additive for water retention materials, an additive for water permeability concrete, an additive for porous concrete, a dew condensation preventing agent, an additive for ground excavating injection materials, an additive for a ground excavation materials, an additive for ground fillers, an additive for ground reinforcement materials, an additive for soil improvement materials, an additive for regenerated aggregates, an additive for mortar for plaster, a trowel finishing agent, an anti-sagging agent, an additive for spraying materials, an additive for non-separation materials in water, an additive for base materials for radioactive shielding, and an additive for concrete repair materials.

Another embodiment of the present invention is a use of a crosslinked polymer formed by polymerizing a monomer mixture containing no less than 40 mol% of a nonionic non-crosslinkable monomer and no less than 0.05 mol% of a nonionic crosslinkable monomer, wherein in the monomer mixture, a content of an anionic monomer is no more than 59.95 mol%, and a water absorption ratio when the crosslinkable polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 20 g/g, as a shrinkage reducing agent for a composition containing cement and water.

Still another embodiment of the present invention is a method for reducing shrinkage of a molded body formed by molding a composition containing cement and water, the method using a crosslinked polymer obtained by polymerizing a monomer mixture containing no less than 40 mol% of a nonionic non-crosslinkable monomer and no less than 0.05 mol% of a nonionic crosslinkable monomer, wherein in the monomer mixture, a content of an anionic monomer is no more than 20 mol%, and a water absorption ratio when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 20 g/g. Formation of the molded body is not particularly limited, and is performed by a conventionally known method. Examples of the molding method include a method for pouring a cement composition into a mold, curing the cement composition together with the mold, and then demolding the mold, and a method for pouring a cement composition into a mold, and then curing the molded body demolded from the mold, and the like. The curing method is not particularly limited, and may be any of underwater curing, sealed curing, and in-air curing. Curing may also be performed by applying a curing agent.

Hereinafter, the present invention will be described in more detail with reference to Examples, but the present invention is not limited only to these Examples. Unless otherwise specified, "%" means "mass%" excluding yield.

(a) Mass Average Particle Size (D50) of Crosslinked Polymer

The mass average particle size (D50) was measured according to the method described in "(3) Mass-Average Particle Diameter (D50) and Logarithmic Standard Deviation ($\sigma\zeta$) of Particle Diameter Distribution" described in columns 27 and 28 of U.S. Patent No. 7638570.

(b) Water Absorption Ratio Under No Pressure (CRC) (NWSP 241.0.R2(15))

The water absorption ratio under no pressure (CRC) was measured in accordance with NWSP 241.0.R2 (15). That is, 0.200 g (mass W0 (g)) of the crosslinked polymer was weighed, uniformly placed in a nonwoven fabric bag (60 × 85 mm), heat-sealed, and then immersed in 500 mL of a 0.90 mass% sodium chloride aqueous solution adjusted to 23 ± 2°C. After a lapse of 30 minutes, the bag was pulled up, and drainage was performed under the condition of 250 G for 3 minutes using a centrifuge (centrifuge manufactured by KOKUSAN Co., Ltd.: type H-122). Thereafter, the mass (W1 (g)) of the bag was measured. The same operation was performed without adding a water-absorbent resin, and the mass (W2 (g)) of the bag at that time was measured. From the obtained W0 (g), W1 (g), and W2 (g), the water absorption ratio under no pressure (CRC) was calculated according to the following (Formula 1).

[Mathematical formula 1]

$$CRC(g/g) = \{(W1 - W2)/W0\} - 1 \quad \ldots \text{ (Formula 1)}$$

Note that "NWSP" represents "Non-Woven Standard Procedures-Edition 2015", in which EDANA (European Disposables And Nonwovens Association) and INDA (Association of the Nonwoven Fabrics Industry) have jointly issued an evaluation method for nonwoven fabrics and their products in the United States and Europe in an integrated manner, indicating a standard measurement method for a water-absorbent resin.

The CRC of the crosslinked polymer is preferably no less than 5 g/g, more preferably no less than 10 g/g, and still more preferably no less than 11 g/g from the viewpoint of liquid absorption performance. In addition, the CRC of the crosslinked polymer is preferably no more than 40 g/g and more preferably no more than 35 g/g from the viewpoint of concrete fluidity.

(c) Absorption Ratio of Cement Simulated Liquid

A solution for water absorption test was prepared (pH 12.9) by mixing 1.72 g of $CaSO_4 \cdot 2H_2O$, 6.96 g of $Na_2SO_4$, 4.76 g of $K_2SO_4$, 7.12 g of KOH and 979.4 g of deionized water. A powdery crosslinked polymer was accurately weighed in an amount of about 0.2 g (mass W1 (g)), placed in a 4 cm × 5 cm nonwoven fabric tea bag, and sealed by heat sealing. The tea bag was placed in a screw vial made of glass and having a specified volume of 50 mL, and immersed in 50 mL of the solution for water absorption test at room temperature (25°C) and normal pressure for a predetermined time (2 hours or 7 days). Then, an end of the tea bag was gripped with tweezers, the tea bag was pulled up, and the tea bag was placed on a Kimtowel (manufactured by Nippon Paper Crecia Co., Ltd.) with one side of the tea bag facing downward, and was allowed to stand for 5 seconds. Subsequently, liquid draining was performed by placing the tea bag on the Kimtowel with the opposite side of the tea bag facing downward and allowing the tea bag to stand for 5 seconds, and then the mass (W2 (g)) of the tea bag was measured. Separately, the same operation was performed without using the crosslinked polymer, and the mass (W3 (g)) of the tea bag at that time was determined as a blank. The water absorption ratio calculated according to the following formula was defined as a liquid absorption capacity.

$$\text{Water absorption ratio (g/g)} = (W2 - W3)/W1 \text{ (g)}$$

(d) Water Content of Crosslinked Polymer

The water content of the crosslinked polymer was measured in accordance with NWSP 230.0.R2 (15). In the measurement, the mass of the sample was changed to 1.0 g, the drying temperature was changed to 180°C, and the water content and the solid content of the crosslinked polymer were calculated from the loss on drying when dried for 3 hours.

The water content of the crosslinked polymer is preferably no less than 2 mass% from the viewpoint of pulverization efficiency and liquid absorption performance. In addition, the water content of the crosslinked polymer is preferably no more than 15 mass% from the viewpoint of pulverization efficiency and liquid absorption performance.

(e) Moisture Absorption Blocking Ratio (B.R.; Blocking Ratio)

The crosslinked polymer in an amount of 2 g was uniformly dispersed in an aluminum cup having a diameter of 52 mm, and then allowed to stand in a thermo-hygrostat (PLATINOUS LUCIFER PL-2G, manufactured by Tabai Espec) at a temperature of 25°C and a relative humidity of 90 ± 5% RH for 1 hour. After a lapse of 1 hour, the crosslinked polymer in the aluminum cup was gently transferred onto a JIS standard sieve with a mesh size of 2000 μm (JIS 8.6

mesh) (The IIDA TESTING SIEVE, inner diameter: 80 mm), and classified for 5 seconds under the conditions of room temperature (20 to 25°C) and a relative humidity of 50% RH using a Ro-Tap sieve shaker (ES-65 sieve shaker manufactured by Iida Manufacturing Co., Ltd., number of revolutions: 230 rpm, number of impulses: 130 rpm). The weight (W1 [g]) of the crosslinked polymer remaining on the JIS standard sieve and the weight (W2 [g]) of the crosslinked polymer passing through the JIS standard sieve were measured, and the moisture absorption fluidity (moisture absorption blocking ratio) was calculated according to the following formula. The lower the value of the blocking ratio, the better the moisture absorption fluidity.

$$\text{Moisture absorption fluidity (B.R.) [wt\%]} = \{W1/(W1 + W2)\} \times 100$$

[Production Example 1] Particulate crosslinked polymer 1

In a 1000 ml cylindrical separable flask, 59.34 g of acrylamide, 0.647 g of N,N'-methylenebisacrylamide, and 191.51 g of water were charged and uniformly dissolved. Here, in the monomer mixture composed of acrylamide and N,N'-methylenebisacrylamide, acrylamide is in an amount of 99.49 mol%, and N,N'-methylenebisacrylamide is in an amount of 0.51 mol%. After the inside of the flask was replaced with nitrogen, the flask was heated to 45°C in a hot water bath, 24.89 g of a 1% aqueous solution of sodium persulfate and 23.86 g of a 0.1% aqueous solution of L-ascorbic acid were added thereto, stirring was stopped, and polymerization was carried out. After the start of polymerization, heat was generated, and the temperature rose to 80°C after 10 minutes. When the increase of the liquid temperature was stopped, the bath temperature was raised to 80°C, and after 30 minutes of aging, a hydrogel-like crosslinked polymer was taken out. The hydrogel-like crosslinked polymer was subdivided into particles of about 1 to 5 mm. The subdivided hydrogel-like crosslinked polymer was spread on a 50 mesh (mesh size: 300 μm) wire mesh and dried with hot air at 180°C for 45 minutes to obtain a dried product. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 1 was obtained. The mass average particle size (D50) of the particulate crosslinked polymer 1 was 400 um, the CRC was 15 g/g, and the water content was 5 mass%.

[Production Example 2] Particulate crosslinked polymer 2

In a 1000 ml cylindrical separable flask, 58.73 g of acrylamide, 1.276 g of N,N'-methylenebisacrylamide, and 191.96 g of water were charged and uniformly dissolved. Here, in the monomer mixture composed of acrylamide and N,N'-methylenebisacrylamide, acrylamide is in an amount of 99.00 mol%, and N,N'-methylenebisacrylamide is in an amount of 1.00 mol%. After the inside of the flask was replaced with nitrogen, the flask was heated to 45°C in a hot water bath, 24.66 g of a 1% aqueous solution of sodium persulfate and 23.64 g of a 0.1% aqueous solution of L-ascorbic acid were added thereto, stirring was stopped, and polymerization was carried out. After the start of polymerization, heat was generated, and the temperature rose to 80°C after 10 minutes. When the increase of the liquid temperature was stopped, the bath temperature was raised to 80°C, and aging was performed for 30 minutes. The hydrogel-like crosslinked polymer was subdivided into particles of about 1 to 5 mm. The subdivided hydrogel-like crosslinked polymer was spread on a 50 mesh (mesh size: 300 μm) wire mesh and dried with hot air at 180°C for 45 minutes to obtain a dried product. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 2 was obtained. The mass average particle size (D50) of the particulate crosslinked polymer 2 was 405 um, the CRC was 15 g/g, and the water content was 5 mass%.

[Production Example 3] Particulate crosslinked polymer 3

In a 1000 ml cylindrical separable flask, 49.36 g of acrylamide, 0.72 g of N,N'-methylenebisacrylamide, and 198.54 g of water were charged and uniformly dissolved. Here, in the monomer mixture composed of acrylamide and N,N'-methylenebisacrylamide, acrylamide is in an amount of 99.33 mol%, and N,N'-methylenebisacrylamide is in an amount of 0.67 mol%. After the inside of the flask was replaced with nitrogen, the flask was heated to 45°C in a hot water bath, 21.27 g of a 1% aqueous solution of sodium persulfate and 20.40 g of a 0.1% aqueous solution of L-ascorbic acid were added thereto, stirring was stopped, and polymerization was carried out. After the start of polymerization, heat was generated, and the temperature rose to 80°C after 10 minutes. When the increase of the liquid temperature was stopped, the bath temperature was raised to 80°C, and aging was performed for 30 minutes. The hydrogel-like crosslinked

polymer was subdivided into particles of about 1 to 5 mm. The subdivided hydrogel-like crosslinked polymer was spread on a 50 mesh (mesh size: 300 μm) wire mesh and dried with hot air at 180°C for 45 minutes to obtain a dried product. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 3 was obtained. The mass average particle size (D50) of the particulate crosslinked polymer 3 was 394 um, the CRC was 13 g/g, and the water content was 5 mass%.

[Production Example 4] Particulate crosslinked polymer 4

In a 1000 ml cylindrical separable flask, 29.9 g of acrylamide, 0.0974 g of N,N'-methylenebisacrylamide, and 45.6 g of water were charged and uniformly dissolved. Here, in the monomer mixture composed of acrylamide and N,N'-methylenebisacrylamide, acrylamide is in an amount of 99.85 mol%, and N,N'-methylenebisacrylamide is in an amount of 0.15 mol%. After the inside of the flask was replaced with nitrogen, the flask was heated to 45°C in a hot water bath, 12.53 g of a 2% aqueous solution of sodium persulfate and 12.01 g of a 0.1% aqueous solution of L-ascorbic acid were added thereto, stirring was stopped, and polymerization was carried out. After the start of polymerization, heat was generated, and the temperature rose to 80°C after 10 minutes. When the increase in the liquid temperature was stopped, the bath temperature was raised to 80°C, and aging was performed for 30 minutes. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 4 was obtained. The mass average particle size (D50) of the particulate crosslinked polymer 4 was 413 um, the CRC was 14 g/g, and the water content was 5 mass%.

[Production Example 5] Particulate crosslinked polymer 5

In a 10 L kneader type polymerization apparatus, 594.3 g of acrylamide, 786.3 g of sodium acrylate, 19.3 g of N,N'-methylenebisacrylamide, and 2555.4 g of water were charged and uniformly dissolved. Here, in the monomer mixture composed of acrylamide, sodium acrylate, and N,N'-methylenebisacrylamide, acrylamide is in an amount of 43.10 mol%, sodium acrylate is in an amount of 56.25 mol%, and N,N'-methylenebisacrylamide is in an amount of 0.65 mol%. After the inside of the kneader type polymerization apparatus was replaced with nitrogen, the jacket temperature was heated to 30°C, 20.2 g of a 25% aqueous solution of sodium persulfate and 24.2 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 um and 250 um. Particles having a particle size of no less than 500 μm were repeatedly pulverized by a roll mill until all of the particles passed through the wire mesh having a mesh size of 500 um, whereby a particulate crosslinked polymer 5 was obtained. The mass average particle size (D50) of the particulate crosslinked polymer 5 was 443 um, the CRC was 20.9 g/g, and the water content was 5 mass%.

[Production Example 6] Particulate crosslinked polymer 6

In a 10 L kneader type polymerization apparatus, 586.2 g of acrylamide, 775.2 g of sodium acrylate, 38.2 g of N,N'-methylenebisacrylamide, and 2555.8 g of water were charged and uniformly dissolved. Here, in the monomer mixture composed of acrylamide, sodium acrylate, and N,N'-methylenebisacrylamide, acrylamide is in an amount of 42.83 mol%, sodium acrylate is in an amount of 55.89 mol%, and N,N'-methylenebisacrylamide is in an amount of 1.28 mol%. After the inside of the kneader type polymerization apparatus was replaced with nitrogen, the jacket temperature was heated to 30°C, 20.2 g of a 25% aqueous solution of sodium persulfate and 24.2 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having

a mesh size of 500 um, whereby a particulate crosslinked polymer 6 was obtained. The mass average particle size (D50) of the particulate crosslinked polymer 6 was 451 um, the CRC was 15.3 g/g, and the water content was 5 mass%.

[Production Example 7] Particulate crosslinked polymer 7

In a 10 L kneader type polymerization apparatus, 560.8 g of acrylamide, 741.9 g of sodium acrylate, 97.3 g of N,N'-methylenebisacrylamide, and 2555.4 g of water were charged and uniformly dissolved. Here, in the monomer mixture composed of acrylamide, sodium acrylate, and N,N'-methylenebisacrylamide, acrylamide is in an amount of 41.93 mol%, sodium acrylate is in an amount of 54.72 mol%, and N,N'-methylenebisacrylamide is in an amount of 3.35 mol%. After the inside of the kneader type polymerization apparatus was replaced with nitrogen, the jacket temperature was heated to 30°C, 20.2 g of a 25% aqueous solution of sodium persulfate and 24.2 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 7 was obtained. The mass average particle size (D50) of the particulate crosslinked polymer 7 was 443 μm, the CRC was 9.5 g/g, and the water content was 5 mass%.

[Production Example 8] Particulate crosslinked polymer 8

In a 10 L kneader type polymerization apparatus, 854.4 g of acrylamide, 484.4 g of sodium acrylate, 21.2 g of N,N'-methylenebisacrylamide, and 2594.4 g of water were charged and uniformly dissolved. Here, in the monomer mixture composed of acrylamide, sodium acrylate, and N,N'-methylenebisacrylamide, acrylamide is in an amount of 63.66 mol%, sodium acrylate is in an amount of 35.61 mol%, and N,N'-methylenebisacrylamide is in an amount of 0.37 mol%. After the inside of the kneader type polymerization apparatus was replaced with nitrogen, the jacket temperature was heated to 30°C, 20.8 g of a 25% aqueous solution of sodium persulfate and 24.9 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 um and 250 um. Particles having a particle size of no less than 500 um were repeatedly pulverized by a roll mill until all of the particles passed through the wire mesh having a mesh size of 500 um, whereby a particulate crosslinked polymer 8 was obtained. The mass average particle size (D50) of the particulate crosslinked polymer 8 was 423 um, the CRC was 18.9 g/g, and the water content was 5 mass%.

[Production Example 9] Particulate crosslinked polymer 9

In a 10 L kneader type polymerization apparatus, 842.9 g of acrylamide, 477.9 g of sodium acrylate, 39.2 g of N,N'-methylenebisacrylamide, and 2594.1 g of water were charged and uniformly dissolved. Here, in the monomer mixture composed of acrylamide, sodium acrylate, and N,N'-methylenebisacrylamide, acrylamide is in an amount of 63.26 mol%, sodium acrylate is in an amount of 35.38 mol%, and N,N'-methylenebisacrylamide is in an amount of 1.36 mol%. After the inside of the kneader type polymerization apparatus was replaced with nitrogen, the jacket temperature was heated to 30°C, 20.8 g of a 25% aqueous solution of sodium persulfate and 24.9 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 9 was obtained. The mass average particle size (D50) of the particulate crosslinked polymer 9 was 463 μm, the CRC was 14.4 g/g, and the water content was 5 mass%.

[Production Example 10] Particulate crosslinked polymer 10

In a 10 L kneader type polymerization apparatus, 808.7 g of acrylamide, 458.6 g of sodium acrylate, 92.7 g of N,N'-methylenebisacrylamide, and 2593.9 g of water were charged and uniformly dissolved. Here, in the monomer mixture composed of acrylamide, sodium acrylate, and N,N'-methylenebisacrylamide, acrylamide is in an amount of 62.03 mol%, sodium acrylate is in an amount of 34.69 mol%, and N,N'-methylenebisacrylamide is in an amount of 3.28 mol%. After the inside of the kneader type polymerization apparatus was replaced with nitrogen, the jacket temperature was heated to 30°C, 20.8 g of a 25% aqueous solution of sodium persulfate and 24.9 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 10 was obtained. The mass average particle size (D50) of the particulate crosslinked polymer 10 was 432 μm, the CRC was 8.8 g/g, and the water content was 5 mass%.

[Production Example 11] Particulate crosslinked polymer 11

In a 10 L kneader type polymerization apparatus, 1146.4 g of acrylamide, 168.4 g of sodium acrylate, 5.0 g of N,N'-methylenebisacrylamide, and 2632.3 g of water were charged and uniformly dissolved. Here, in the monomer mixture composed of acrylamide, sodium acrylate, and N,N'-methylenebisacrylamide, acrylamide is in an amount of 87.20 mol%, sodium acrylate is in an amount of 12.63 mol%, and N,N'-methylenebisacrylamide is in an amount of 0.17 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 11 was obtained. The mass average particle size (D50) of the particulate crosslinked polymer 11 was 420 μm, the CRC was 22.1 g/g, and the water content was 5 mass%.

[Production Example 12] Particulate crosslinked polymer 12

In a 10 L kneader type polymerization apparatus, 1138.9 g of acrylamide, 167.4 g of sodium acrylate, 13.7 g of N,N'-methylenebisacrylamide, and 2633.4 g of water were charged and uniformly dissolved. Here, in the monomer mixture composed of acrylamide, sodium acrylate, and N,N'-methylenebisacrylamide, acrylamide is in an amount of 86.91 mol%, sodium acrylate is in an amount of 12.63 mol%, and N,N'-methylenebisacrylamide is in an amount of 0.48 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 12 was obtained. The mass average particle size (D50) of the particulate crosslinked polymer 12 was 415 μm, the CRC was 16.9 g/g, and the water content was 5 mass%.

[Production Example 13] Particulate crosslinked polymer 13

In a 10 L kneader type polymerization apparatus, 1104.4 g of acrylamide, 53.2 g of sodium acrylate, 53.2 g of N,N'-methylenebisacrylamide, and 2633.1 g of water were charged and uniformly dissolved. Here, in the monomer mixture composed of acrylamide, sodium acrylate, and N,N'-methylenebisacrylamide, acrylamide is in an amount of 85.67 mol%, sodium acrylate is in an amount of 12.42 mol%, and N,N'-methylenebisacrylamide is in an amount of 1.9 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 13 was obtained. The mass average particle size (D50) of the particulate crosslinked polymer 13 was 451 μm, the CRC was 10.7 g/g, and the water content was 5 mass%.

[Production Example 14] Particulate crosslinked polymer 14

In a 10 L kneader type polymerization apparatus, 1233.2 g of acrylamide, 6.7 g of N,N'-methylenebisacrylamide, and 2714.2 g of water were charged and uniformly dissolved. Here, in the monomer mixture composed of acrylamide and N,N'-methylenebisacrylamide, acrylamide is in an amount of 99.75 mol%, and N,N'-methylenebisacrylamide is in an amount of 0.25 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 14 was obtained. The mass average particle size (D50) of the particulate crosslinked polymer 14 was 447 μm, the CRC was 17.6 g/g, and the water content was 5 mass%.

[Production Example 15] Particulate crosslinked polymer 15

In a 10 L kneader type polymerization apparatus, 1215.6 g of acrylamide, 2.7 g of N,N'-methylenebisacrylamide, and 2681.4 g of water were charged and uniformly dissolved. Here, in the monomer mixture composed of acrylamide and N,N'-methylenebisacrylamide, acrylamide is in an amount of 99.90 mol%, and N,N'-methylenebisacrylamide is in an amount of 0.10 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 15 was obtained. The mass average particle size (D50) of the particulate crosslinked polymer 15 was 465 μm, the CRC was 21.2 g/g, and the water content was 3 mass%.

[Production Example 16] Particulate crosslinked polymer 16

In a 10 L kneader type polymerization apparatus, 1238.4 g of acrylamide, 1.3 g of N,N'-methylenebisacrylamide,

and 2713.6 g of water were charged and uniformly dissolved. Here, in the monomer mixture composed of acrylamide and N,N'-methylenebisacrylamide, acrylamide is in an amount of 99.95 mol%, and N,N'-methylenebisacrylamide is in an amount of 0.05 mol%. After the inside of the kneader type polymerization apparatus was replaced with nitrogen, the jacket temperature was heated to 30°C, 21.4 g of a 25% aqueous solution of sodium persulfate and 25.7 g of a 2% aqueous solution of L-ascorbic acid were added thereto, and polymerization was carried out. After the start of polymerization, heat was generated, and the temperature rose to 100°C after 10 minutes. After the start of heat generation by polymerization was confirmed, the bath temperature was raised, and aging was performed for 30 minutes from the time point when the bath temperature reached 60°C. The obtained polymer was subdivided, dried with hot air at 130°C for 3 hours, pulverized, and then sieved, whereby a dried product was obtained. Next, the dried product was pulverized with a roll mill, and further classified with JIS standard sieves having openings of 500 μm and 250 μm. Particles having a particle size of no less than 500 μm were repeatedly pulverized by a roll mill until all of the particles passed through the wire mesh having a mesh size of 500 μm, whereby a particulate crosslinked polymer 16 was obtained. The mass average particle size (D50) of the particulate crosslinked polymer 16 was 466 μm, the CRC was 20.5 g/g, and the water content was 4 mass%.

[Comparative Production Example 1] Comparative crosslinked polymer 1

In a 1000 ml cylindrical separable flask, 21.28 g of acrylamide, 31.39 g of acrylic acid, 0.15 g of N,N-methylenebisacrylamide, and 75.90 g of water were charged and uniformly dissolved. Here, in the monomer mixture composed of acrylic acid, acrylamide and N,N-methylenebisacrylamide, acrylic acid is in an amount of 31.00 mol%, acrylamide is 68.85 mol%, and N,N-methylenebisacrylamide is 0.15 mol%. After the inside of the flask was replaced with nitrogen, the flask was heated to 45°C in a hot water bath, 14.76 g of a 1% aqueous solution of sodium persulfate and 6.58 g of a 0.2% aqueous solution of L-ascorbic acid were added thereto, stirring was stopped, and polymerization was carried out. After the start of polymerization, heat was generated, and the temperature rose to 80°C after 10 minutes. When the increase in the liquid temperature was stopped, the bath temperature was raised to 80°C, and aging was performed for 30 minutes. The obtained gel-like polymer was subdivided with a cutter, then dried with hot air at 130°C for 3 hours, pulverized with a mixer, and then classified. The classification was performed in the same manner as in [0117] to [0119] of JP 2015-048386 A, whereby a powdery comparative crosslinked polymer 1 was obtained. The average particle size of the comparative crosslinked polymer 1 was 50 μm, the amount of particles of no less than 150 μm and less than 600 μm was 0 mass%, the CRC was 50 g/g, and the water content was 5 weightt. Since the comparative crosslinked polymer 1 was very fine particles, the average particle size was measured as follows. A laser diffraction particle size distribution analyzer LA-920 manufactured by HORIBA, Ltd. was used. The distribution form was set to standard, the particle size basis was set to volume, and the graph form was set to a bar graph. Then methanol was put in a sample bath to perform air venting and optical axis adjustment. Next, the sample was placed in the sample bath. At the same time as the sample was placed, ultrasonic waves were applied for 2 minutes, and then the sample concentration was adjusted such that the transmittance was 81 to 88%. The measurement was performed after the sample concentration was adjusted, and the ultrasonic treatment was performed again for 2 minutes. Since the comparative crosslinked polymer 1 is very fine particles, the CRC cannot be measured as it is. Thus, the CRC was measured when the mass average mass average particle size (D50) was 300 to 400 μm during the pulverization.

[Reference Production Example 1] Production of polymer as dispersant 1

In a glass reaction vessel equipped with a Dimroth condenser, a stirring blade made of Teflon (registered trademark), a stirrer with a stirring seal, a nitrogen supply tube, and a temperature sensor, 80.0 parts of ion-exchanged water was charged. The water was heated to 70°C while nitrogen was introduced at 200 mL/min under stirring at 250 rpm. Next, a mixed solution of 133.4 parts of methoxy polyethylene glycol monomethacrylic acid ester (average number of moles of added ethylene oxide: 9), 26.6 parts of methacrylic acid, 1.53 parts of mercaptopropionic acid, and 106.7 parts of ion-exchanged water was added dropwise over 4 hours, and at the same time, a mixed solution of 1.19 parts of ammonium persulfate and 50.6 parts of ion-exchanged water was added dropwise over 5 hours. After completion of the dripping, the temperature was maintained at 70°C for 1 hour to complete polymerization reaction. Then, the obtained material was neutralized with an aqueous solution of sodium hydroxide, whereby an aqueous solution of a dispersant 1 having a weight average molecular weight of 100,000 was obtained.

[Reference Production Example 2] Production of polymer as dispersant 2

In a glass reaction vessel equipped with a Dimroth condenser, a stirring blade made of Teflon (registered trademark), a stirrer with a stirring seal, a nitrogen supply tube, and a temperature sensor, 198.2 parts of a product obtained by adding ethylene oxide to a hydroxyl group of 3-methyl-3-buten-1-ol (isoprenol) (hereinafter, referred to as

IPN-50) (average number of moles of added ethylene oxide: 50) (80% aqueous solution), 0.32 parts of acrylic acid, 12.47 parts of hydrogen peroxide water (2% aqueous solution), and 44.75 parts of ion-exchanged water were charged, and the mixture was heated to 58°C while nitrogen was introduced at 200 mL/min under stirring at 250 rpm. Next, a mixed solution of 27.12 parts of acrylic acid and 108.5 parts of ion-exchanged water was added dropwise over 3 hours, and at the same time, a mixed solution of 0.74 parts of L-ascorbic acid, 1.61 parts of 3-mercaptopropionic acid, and 86.31 parts of ion-exchanged water was added dropwise over 3 hours and 30 minutes. After completion of the dripping, the temperature was maintained at 58°C for 1 hour to complete polymerization reaction. Then, the obtained material was neutralized with an aqueous solution of sodium hydroxide, whereby an aqueous solution of a dispersant 2 having a weight average molecular weight of 140,000 was obtained.

A concrete test was conducted for the particulate crosslinked polymers 1 to 16 prepared in Production Examples 1 to 16 and the comparative crosslinked polymer 1.

(1) Concrete Preparation Method

A mortar in which the crosslinked polymers 1 to 16 prepared in Production Examples 1 to 16 and the comparative crosslinked polymer 1 were added as shrinkage reducing agents and a mortar in which no crosslinked polymer was added were prepared.

Examples in which the crosslinked polymers 1 to 16 were added were designated as Examples 1 to 16 (Examples 1 to 4 and Examples 9 to 20 were of Blending 1 of the following cement composition, and Examples 5 to 8 were of Blending 2 of the following cement composition), examples in which the comparative crosslinked polymer 1 was added were designated as Comparative Examples 3 and 6, and examples in which no crosslinked polymer was added were designated as Comparative Examples 1, 2, 4, and 5.

The blending to which a crosslinked polymer was added and the blending to which no crosslinked polymer was added were as shown in Table 1 below.

(Concrete Blending)

Cement compositions were prepared as in Table 1.

The materials used for the measurement, a forced kneading mixer, and the measuring instruments were temperature-controlled in the above-described measurement temperature atmosphere so that the temperature of the cement composition was 20°C, and kneading and each measurement were performed in the measurement temperature atmosphere. In addition, in order to avoid the influence of the air bubbles in the cement composition on the fluidity of the cement composition, an oxyalkylene-based antifoamer was used as necessary, and the air amount was adjusted to be no more than 2.0%.

[Table 1]

| | Cement | | Expansion material | Water | Sand | Stone | Air | W/B |
|---|---|---|---|---|---|---|---|---|
| | Type | kg/m^3 | | | | | | |
| Blending 1 | Taiheiyo OPC | 573 | 0 | 172 | 765 | 866 | 15 | 30 |
| Comparative blending example 1 | Taiheiyo OPC | 553 | 20 | 172 | 765 | 866 | 15 | 30 |
| Blending 2 | Mitsubishi UBE SFC | 1000 | 0 | 150 | 441 | 931 | 15 | 15 |
| Comparative blending example 2 | Mitsubishi UBE SFC | 980 | 20 | 150 | 441 | 931 | 15 | 15 |

Cement: normal Portland cement (manufactured by Taiheiyo Cement Corporation) or Silica fume cement (manufactured by Mitsubishi UBE Cement Corporation)
Water: ion-exchanged water
Sand: sand from Oi river
Stone: crushed stone produced in Aomi

Dispersant: In all tests, a dispersant (dispersant 1 or dispersant 2) in the blend amounts listed in Tables 2 to 4 were added to cement. The amount of water in the table is a weight including the weight of the dispersant.
Antifoamer: oxyalkylene-based antifoamer

Expansion material: HYPER EXPAN (manufactured by Taiheiyo Materials Corporation)

(Concrete Kneading Method)

The kneading was performed under an environment of a room temperature of 20 ± 3°C and a humidity of 60 ± 5%. Concrete was produced using a forced kneading mixer with a kneading time of 90 seconds, and the flow value and the air amount were measured. The flow value and the air amount were measured in accordance with Japanese Industrial Standards (JISA-1101, 1128). The amount of the cement dispersant added was an amount added at which the flow value was 520 mm to 620 mm.

(Autogenous Shrinkage Strain Measurement Method)

After the flow value and the air amount were measured, a sample for a free strain test was prepared, and the free strain was measured under the following conditions.
The autogenous shrinkage strain was measured using a strain gauge (type: PMFL-60T (Tokyo Measuring Instruments Lab.)) and a data logger (type: KMC-70-120-H3 (Kyowa Electronic Instruments Co., Ltd.)).
Fig. 1 is a schematic diagram illustrating a method for measuring autogenous shrinkage strain. The time point immediately after the sample was filled in a concrete specimen mold was used as a starting point of the shrinkage strain amount measurement.
The procedure of strain measurement was as follows.

(1) The flow value and air amount of adjusted concrete were confirmed to have predetermined values.
(2) A polypropylene container (φ 100 × 200 mm) equipped with the strain gauge as illustrated in Fig. 1 was filled with concrete twice up to about 100 mm from the bottom. For each filling, the concrete was tamped 15 times using a steel tamping rod (φ 9 × 300 mm), and then the surroundings of the container were lightly beaten several times with a wooden hammer to uniformly fill the concrete.
(3) After filling the mortar, the container was capped with a polyvinylidene chloride sheet, stored at 20 ± 2°C for 1 day, and strain values were measured at intervals of 30 minutes. After about 1 day, the concrete was removed from the mold and sealed in an aluminum-deposited zip bag, and a strain value after 7 days or 28 days was measured.

(Calculation of Shrinkage Strain Amount)

The amount of shrinkage strain was measured with the following formula using each measurement time and the strain value at the starting point.

[Shrinkage strain amount (× $10^{-6}$)] = [strain value at each measurement time] - [strain value at starting point]

The concrete test results and the results of the amount of shrinkage strain are shown in Tables 2, 3, and 4. In Table 2, the left column of Strain indicates the strain value measured after 7 days, and the right column indicates the strain value measured after 28 days. In Tables 3 and 4, the strain after 7 days is shown.
In Tables 2, 3, and 4, the addition amount of the cement dispersant and the crosslinked polymer represents the addition amount (mass%) of the crosslinked polymer with respect to the total amount of 100 mass% of cement (wt%/C). The amount of air in the mortar was less than 2% in all the examples. In Tables 3 and 4, Water absorption ratio (2h) indicates the water absorption ratio of the crosslinked polymer after immersion in the cement simulated liquid for 2 hours, and Water absorption ratio (1w) indicates the water absorption ratio of the crosslinked polymer after immersion in the cement simulated liquid for 1 week (7 days).

[Table 2]

| | Blending | Cement dispersant | | Additive | | Flow value | Strain | Strain |
|---|---|---|---|---|---|---|---|---|
| | | Type | wt%/C | Type | wt%/C | mm | με | με |
| Comparative Example 1 | Blending 1 | Dispersant 1 | 0.27 | None | - | 583 | -357 | -498 |
| Example 1 | Blending 1 | Dispersant 1 | 0.35 | Crosslinked polymer 1 | 0.3 | 573 | -149 | -257 |
| Example 2 | Blending 1 | Dispersant 1 | 0.34 | Crosslinked polymer 2 | 0.3 | 582 | -132 | -240 |
| Example 3 | Blending 1 | Dispersant 1 | 0.35 | Crosslinked polymer 3 | 0.3 | 591 | -155 | -268 |
| Example 4 | Blending 1 | Dispersant 1 | 0.32 | Crosslinked polymer 4 | 0.3 | 578 | -115 | -197 |
| Comparative Example 2 | Comparative blending example 1 | Dispersant 1 | 0.26 | None | - | 575 | -120 | -176 |
| Comparative Example 3 | Blending 1 | Dispersant 1 | 0.46 | Comparative crosslinked polymer 1 | 0.3 | 620 | -573 | -634 |

[Table 3]

| | Blending | Cement dispersant | | Additive | | | | Flow value | Strain after 7 days |
|---|---|---|---|---|---|---|---|---|---|
| | | Type | wt%/C | Type | Water absorption ratio g/g (2h) | Water absorption ratio g/g (1w) | wt%/C | mm | $\mu\varepsilon$ |
| Comparative Example 4 | Blending 2 | Dispersant 2 | 0.29 | None | - | - | - | 533 | -430 |
| Example 5 | Blending 2 | Dispersant 2 | 0.30 | Crosslinked polymer 1 | 19.2 | 36.5 | 0.3 | 578 | 100 |
| Example 6 | Blending 2 | Dispersant 2 | 0.30 | Crosslinked polymer 2 | 16.9 | 28.6 | 0.3 | 588 | 51 |
| Example 7 | Blending 2 | Dispersant 2 | 0.31 | Crosslinked polymer 3 | 13.4 | 21.7 | 0.3 | 585 | 79 |
| Example 8 | Blending 2 | Dispersant 2 | 0.29 | Crosslinked polymer 4 | 7.1 | 17.9 | 0.3 | 590 | 45 |
| Comparative Example 5 | Comparative blending example 2 | Dispersant 2 | 0.32 | None | - | - | - | 615 | -261 |
| Comparative Example 6 | Blending 2 | Dispersant | 5.00 | Comparative crosslinked polymer 1 | 36 | 36 | 0.3 | <350 | Unmeasurable |

[Table 4]

| | Blending | Cement dispersant | | Additive | | | | Flow value | Strain after 7 days |
|---|---|---|---|---|---|---|---|---|---|
| | | Type | wt%/C | Type | Water absorption ratio g/g (2h) | Water absorption ratio g/g (7d) | wt%/C | mm | $\mu\varepsilon$ |
| Example 9 | Blending 1 | Dispersant 2 | 0.19 | Crosslinked polymer 5 | 20.9 | 21.6 | 0.3 | 600 | -174 |
| Example 10 | Blending 1 | Dispersant 2 | 0.18 | Crosslinked polymer 6 | 15.3 | 14.7 | 0.3 | 625 | -238 |
| Example 11 | Blending 1 | Dispersant 2 | 0.17 | Crosslinked polymer 7 | 9.5 | 9.0 | 0.3 | 600 | -302 |
| Example 12 | Blending 1 | Dispersant 2 | 0.19 | Crosslinked polymer 8 | 18.9 | 21.2 | 0.3 | 615 | -167 |
| Example 13 | Blending 1 | Dispersant 2 | 0.18 | Crosslinked polymer 9 | 14.4 | 15.9 | 0.3 | 600 | -239 |
| Example 14 | Blending 1 | Dispersant 2 | 0.16 | Crosslinked polymer 10 | 8.8 | 9.5 | 0.3 | 578 | -282 |
| Example 15 | Blending 1 | Dispersant 2 | 0.19 | Crosslinked polymer 11 | 22.1 | 34.8 | 0.3 | 583 | -101 |
| Example 16 | Blending 1 | Dispersant 2 | 0.18 | Crosslinked polymer 12 | 16.9 | 27.4 | 0.3 | 588 | -186 |
| Example 17 | Blending 1 | Dispersant 2 | 0.17 | Crosslinked polymer 13 | 10.7 | 15.3 | 0.3 | 605 | -297 |
| Example 18 | Blending 1 | Dispersant 2 | 0.21 | Crosslinked polymer 14 | 17.6 | 33.2 | 0.3 | 585 | -196 |
| Example 19 | Blending 1 | Dispersant 2 | 0.26 | Crosslinked polymer 15 | 21.2 | 38.4 | 0.3 | 598 | -163 |
| Example 20 | Blending 1 | Dispersant 2 | 0.27 | Crosslinked polymer 16 | 20.5 | 45.8 | 0.3 | 610 | -79 |

In Examples 1 to 20 in which the crosslinked polymers 1 to 16 was added, the shrinkage strain after 7 days was smaller than those in Comparative Examples 1 and 4 in any case, and it was found that the shrinkage reducing agent of the present invention was effective in reduction of autogenous shrinkage. In addition, it was also found that there is a remarkable effect in reducing autogenous shrinkage with a small amount of addition as compared with Comparative Examples 2 and 5 in which an expansion material, which is an existing technology, is blended. Further, in Examples 1 and 2 in which the crosslinked polymer 1 was added, the shrinkage strain after 28 days was smaller than those in Comparative Example 1 and Comparative Example 4, and it was also found that the shrinkage reducing agent of the present invention has a long-term shrinkage reducing effect.

Further, in Comparative Example 3 using the comparative crosslinked body 1, since the water absorption performance in the cement composition was high, it was necessary to add a cement dispersant in an amount of 2.32 mass% with respect to the total amount of 100 mass% of the cement mass in order to achieve the same concrete flow. In addition, it was confirmed that greater autogenous shrinkage than in Comparative Example 1 was exhibited, and the concrete specimen was greatly distorted. In Comparative Example 6 in which the comparative crosslinked polymer 1 was used, even a slight amount of water in the concrete composition was absorbed because of the high water absorption performance of the comparative crosslinked polymer 1, and thus, even when the cement dispersant was added in an amount of 5.00 mass% with respect to the total amount of 100 mass% of the cement mass, fluidity was not exhibited, and the autogenous shrinkage reducing property could not be evaluated.

The present application is based on Japanese Patent Application No. 2021-021447 filed on February 15, 2021, the disclosure of which is incorporated herein by reference in its entirety.

## Claims

1. A shrinkage reducing agent comprising a crosslinked polymer,

   wherein the crosslinked polymer is formed by polymerizing a monomer mixture containing no less than 40 mol% of a nonionic non-crosslinkable monomer and no less than 0.05 mol% of a nonionic crosslinkable monomer, a content of an anionic monomer in the monomer mixture is no more than 59.95 mol%, and
   a water absorption ratio of the crosslinked polymer when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 25 g/g.

2. The shrinkage reducing agent according to claim 1, wherein the shrinkage reducing agent is an autogenous shrinkage reducing agent.

3. The shrinkage reducing agent according to claim 1 or 2, wherein in the monomer mixture, the content of the anionic monomer is no more than 20 mol%.

4. The shrinkage reducing agent according to claim 1 or 2, wherein in the monomer mixture, the content of the anionic monomer is more than 20 mol% and no more than 59.95 mol%, and a content of the nonionic crosslinkable monomer is no less than 0.5 mol%.

5. The shrinkage reducing agent according to claim 4, wherein the content of the nonionic crosslinkable monomer is no more than 3 mol%.

6. The shrinkage reducing agent according to any one of claims 1 to 5, wherein the nonionic non-crosslinkable monomer contains a (meth)acrylamide-based monomer.

7. A use of a crosslinked polymer as a shrinkage reducing agent for a composition containing cement and water, wherein the crosslinked polymer is formed by polymerizing a monomer mixture containing no less than 40 mol% of a nonionic non-crosslinkable monomer and no less than 0.05 mol% of a nonionic crosslinkable monomer, a content of an anionic monomer in the monomer mixture is no more than 59.95 mol%, and a water absorption ratio when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 20 g/g.

8. A method for reducing shrinkage of a molded body formed by molding a composition containing cement and water,

the method using a crosslinked polymer formed by polymerizing a monomer mixture containing no less than 40 mol% of a nonionic non-crosslinkable monomer and no less than 0.05 mol% of a nonionic crosslinkable monomer, wherein a content of an anionic monomer in the monomer mixture is no more than 20 mol%, and a water absorption ratio when the crosslinked polymer is immersed in an aqueous solution having a pH of 12.9 (here, the aqueous solution having a pH of 12.9 is an aqueous solution obtained by mixing 1.72 g of $CaSO_4 \cdot 2H_2O$, 6.96 g of $Na_2SO_4$, 4.76 g of $K_2SO_4$, 7.12 g of KOH, and 979.4 g of deionized water) at 25°C for 2 hours is less than 20 g/g.

**9.** A cement composition comprising the shrinkage reducing agent according to any one of claims 1 to 6, cement, and water.

**10.** The cement composition according to claim 9, further comprising a cement dispersant for dispersing cement.

FIG. 1

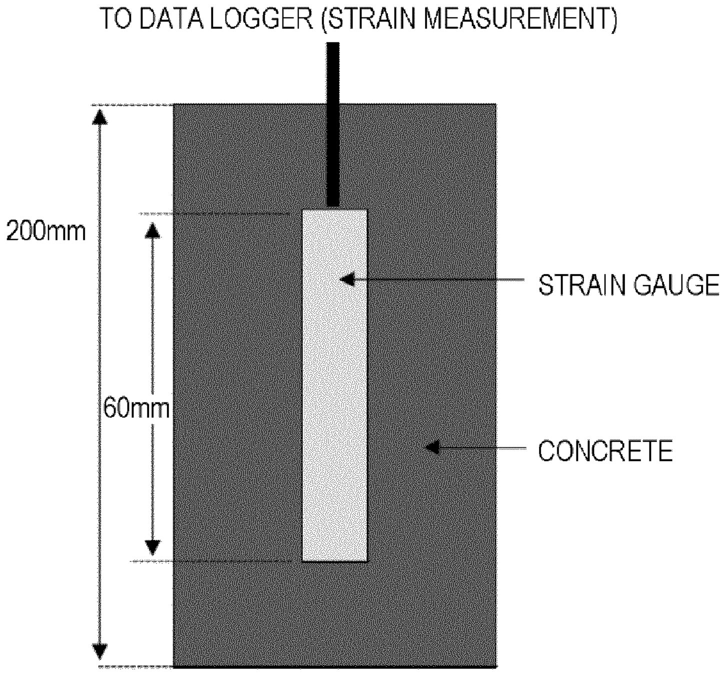
TO DATA LOGGER (STRAIN MEASUREMENT)
200mm
60mm
STRAIN GAUGE
CONCRETE

## INTERNATIONAL SEARCH REPORT

International application No. **PCT/JP2022/005398**

**A. CLASSIFICATION OF SUBJECT MATTER**

***C08F 220/56***(2006.01)i; ***C04B 24/24***(2006.01)i; ***C04B 24/26***(2006.01)i; ***C04B 28/02***(2006.01)i
FI: C04B24/26 D; C04B24/24 A; C04B28/02; C08F220/56

According to International Patent Classification (IPC) or to both national classification and IPC

**B. FIELDS SEARCHED**

Minimum documentation searched (classification system followed by classification symbols)

C04B24/26; C04B24/24; C04B28/02; C08F220/56

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/209057 A1 (NIPPON SHOKUBAI CO., LTD.) 15 October 2020 (2020-10-15) entire text | 1-10 |
| A | JP 2020-200214 A (NIPPON SHOKUBAI CO., LTD.) 17 December 2020 (2020-12-17) entire text | 1-10 |
| A | JP 2014-91636 A (NIPPON SHOKUBAI CO., LTD.) 19 May 2014 (2014-05-19) entire text, all drawings | 1-10 |
| A | JP 4-346833 A (SHOWA DENKO KK) 02 December 1992 (1992-12-02) entire text | 1-10 |
| A | JP 9-2854 A (HOECHST IND. KK) 07 January 1997 (1997-01-07) entire text, all drawings | 1-10 |
| A | JP 2010-143815 A (NAGAOKA UNIV. OF TECHNOLOGY) 01 July 2010 (2010-07-01) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/005398**

| Patent document cited in search report | Publication date (day/month/year) | Patent family member(s) | Publication date (day/month/year) |
|---|---|---|---|
| WO 2020/209057 A1 | 15 October 2020 | JP 6959475 B2 | |
| JP 2020-200214 A | 17 December 2020 | (Family: none) | |
| JP 2014-91636 A | 19 May 2014 | (Family: none) | |
| JP 4-346833 A | 02 December 1992 | (Family: none) | |
| JP 9-2854 A | 07 January 1997 | (Family: none) | |
| JP 2010-143815 A | 01 July 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002121055 A
- JP H04346833 A
- WO 2020209057 A
- US 4625001 A
- US 4873299 A
- US 4286082 A
- US 4973632 A
- US 4985518 A
- US 5124416 A
- US 5250640 A
- US 5264495 A
- US 5145906 A
- US 5380808 A
- EP 0811636 A
- EP 0955086 A
- EP 0922717 A
- JP 2000063527 A
- JP S5918338 A
- JP H7223852 A
- JP H10236858 A
- JP 2001220417 A
- JP 2002121056 A
- JP 2018111622 A
- JP 2006052381 A
- JP 2008517080 A
- US 7638570 B
- JP 2015048386 A
- JP 2021021447 A


### Non-patent literature cited in the description


- Effect of internal curing by using superabsorbent polymer (SAP) on autogenous shrinkage and other properties of a high-performance fine-grained concrete: result of a RILEM round-robin test. *Materials and Structures,* 2014, vol. 47, 541-562
- Mitigating autogenous shrinkage in HPC by internal curing using superabsorbent polymers. *International RILEM Conference on Volume Changes of Hardening Concrete: Testing and Mitigation,* 20 August 2006
- The influence of superabsorbent polymers on the autogenous shrinkage properties of cement pastes with supplementary cementitious materials. *Cement and Concrete Research,* 2015, vol. 74, 59-67
- The use of superabsorbent polymers in high performance concrete to mitigate autogenous shrinkage in a large-scale demonstrator. *Sustainability,* 2020, vol. 12 (11), 4741
- Non-Woven Standard Procedures-Edition. European Disposables And Nonwovens Association, 2015